# EUROPÄISCHE PATENTSCHRIFT

(11) **EP 2 689 306 B1**
(45) Veröffentlichungstag und Bekanntmachung des Hinweises auf die Patenterteilung: **29.11.2017**
(21) Anmeldenummer: 12712885.8
(22) Anmeldetag: 22.03.2012
(51) Int. Cl.: G05B 19/418

(54) **STEUERVORRICHTUNG UND VERFAHREN ZUR STEUERUNG DRUCKPRODUKTVERARBEITUNGSANLAGE**
CONTROL DEVICE AND METHOD FOR CONTROLLING A PRINTED PRODUCT PROCESSING SYSTEM
DISPOSITIF DE COMMANDE ET PROCÉDÉ DE COMMANDE D'UNE INSTALLATION DE TRAITEMENT DE PRODUITS IMPRIMÉS

(30) Priorität: 24.03.2011 CH 537112011
(43) Veröffentlichungstag der Anmeldung: 29.01.2014
(73) Patentinhaber: Ferag AG, 8340 Hinwil (CH)
(72) Erfinder: GROTH, Uwe, CH-8342 Wernetshausen (CH)
(74) Vertreter: IPrime Rentsch Kaelin AG
(86) Internationale Anmeldenummer: PCT/CH2012/000066
(87) Internationale Veröffentlichungsnummer: WO 2012/126130

(56) Entgegenhaltungen:
- EP-A1- 1 247 656
- EP-A1- 1 338 542
- EP-A2- 0 435 451
- JP-A- 2000 198 509
- US-A- 4 958 292
- US-A- 5 346 196
- US-A1- 2002 143 423
- US-A1- 2003 023 418
- US-A1- 2008 300 705

## Beschreibung

### Technisches Gebiet

Die vorliegende Erfindung betrifft eine computerisierte Steuervorrichtung und ein computerimplementiertes Verfahren zur Steuerung einer Druckproduktverarbeitungsanlage. Die vorliegende Erfindung betrifft insbesondere eine computerisierte Steuervorrichtung und ein computerimplementiertes Verfahren zur Steuerung einer Druckproduktverarbeitungsanlage, welche eine Sammelanlage mit einem Förderer und mehreren Zuförderern zur Erstellung von Produktkollektionen aus von den Zuförderern zugeführten Produkten, insbesondere Druckprodukte, um fasst.

### Stand der Technik

Bei bekannten Sammelanlagen zum Sammeln (im weiteren Sinne) von Produktkollektionen aus mehreren Produkten durch Zusammentragen, Einstecken oder Sammeln (im engeren Sinne), werden die verschiedenen Produkte von mehreren seriell angeordneten Zuförderern sequentiell einem Förderer zugeführt, wo sie zusammengetragen, eingesteckt oder gesammelt werden, beispielsweise auf respektive in Kollektionsträgern wie Greifern. Bei Druckproduktverarbeitungsanlagen umfassen die Produkte insbesondere flächige Druckprodukte unterschiedlicher Dicke aber auch andere flächige Produkte wie beispielsweise Datenträger oder andere Beilagen. Die aus den Produkten erstellten Produktkollektionen werden vom Förderer sequentiell einem oder mehreren Weiterverarbeitungsanlagen zugeführt, beispielsweise zum Einstecken, Folieren, Heften, Kleben, Schneiden und/oder Stapeln. Typischerweise, ist eine zum Zusammentragen von Produkten eingerichtete Sammelanlage mit einem umlaufenden Förderer ausgeführt. Ein umlaufender Förderer ermöglicht den Transport von Produkten, Produktkollektionen respektive Kollektionsträgern entlang einer geschlossenen Kurve bzw. Bahn zyklisch an den produktzuführenden Zuförderern vorbei. Somit können bestimmte Produkte respektive Produktkollektionen mehrere Zyklen auf dem umlaufenden Förderer durchführen, so dass sie dem Prozess des Zusammentragens mehrfach zugeführt werden, bevor sie einer Weiterverarbeitungsanlagen übergeben werden.

Vor und während der Produktion müssen die Zuförderer durch Bedienpersonal der Druckproduktverarbeitungsanlage manuell mit den zuzuführenden Produkten belegt werden. Typischerweise werden die Produkte auf Paletten zu den Zuförderern herangeführt und die Produkte werden zur Belegung eines Zuförderers vom Bedienpersonal stapel- oder bündelweise von einer Palette in den betreffenden Zuförderer gepackt. Wenn eine Palette leer ist und/oder wenn der Zuförderer mit einem anderen Produkt belegt werden soll, muss die leere respektive zur Zeit nicht verwendete Palette wegtransportiert und eine neue Palette mit dem zuzuführenden Produkt zum Zuförderer hintransportiert werden, beispielsweise mittels eines Hubwagens. Bei Druckproduktverarbeitungsanlagen mit einer grossen Anzahl von Zuförderern, beispielsweise mehrere Dutzend oder über hundert, und einer darauf auszuführenden Produktion zur Erstellung mehrerer verschiedenen Produktkollektionen aus einer noch grösseren Anzahl von verschiedenen zuzuführenden Produkten, beispielsweise über hundert oder mehrere hundert verschiedene Beilagen, führt das Hin- und Hertransportieren von Paletten mit grösserer Anzahl von Zuförderern, insbesondere über zwanzig Zuförderer, und zuzuführenden Produkten zunehmend zu einem beträchtlichen Koordinations- und Arbeitsaufwand mit entsprechendem Personalbedarf und Zeitaufwand. Ein verspätetes Herbeiführen einer einzigen Palette und damit eine verspätete Belegung eines Zuförderers mit dem zuzuführenden Produkt führen in der Regel zu Produktionsverzögerungen und/oder verursachen die Erstellung von fehlerhaften Produktkollektionen und deren Ausschleusung.

Die EP 1 338 542 (Koninklijke PTT Post) zeigt eine Druckproduktverarbeitungsanlage mit mehreren Zuförderern. Auf einem Computer wird eine Batchverarbeitung ermittelt, bei welcher der Wechsel von Druckprodukten bei den Zuförderern minimiert ist. Bei den Zuförderern sind Bildschirme und Anzeigevorrichtungen wie Warnlampen angebracht. Auf den Bildschirmen werden Meldungen betreffend das Wechseln von Druckprodukten dargestellt. Bei leuchtender Warnlampe ist die Verarbeitung im Gang. Bei langsam blinkender Warnlampe ist ein Wechsel vorzunehmen. Bei rasch blinkender Warnlampe erfolgt ein Stopp und eine Intervention ist erforderlich. Kommunikationsmittel zwischen dem Computer und den Zuförderern können drahtbasiert oder drahtlos ausgeführt sein. Das Dokument JP 2000 198509 A betrifft eine Lösung zur Beförderung von Produkten unter Verwendung von Transportfahrzeugen, wie z. B. einem Gabelstapler, wobei die Transportfahrzeugen eine Kommunikationsvorrichtung mit einer Anzeigevorrichtung und einer Bestätigungstaste aufweisen, wobei die Kommunikationsvorrichtungen der Transportfahrzeugen ausgeführt sind, Beförderungsanweisungen über ein drahtloses Netzwerk von einem Server einer zentralen Verwaltungsstelle zu erhalten, diese Beförderungsanweisungen an der Anzeigevorrichtung anzuzeigen und bei Betätigung der Bestätigungstaste eine Bestätigung der Ausführung der Beförderungsanweisungen an den Server der zentralen Verwaltungsstelle zu übermitteln.

### Darstellung der Erfindung

Es ist eine Aufgabe der vorliegenden Erfindung eine computerisierte Steuervorrichtung und ein computerimplementiertes Verfahren zur Steuerung einer Druckproduktverarbeitungs-anlage mit Sammelanlage vorzuschlagen, welche zumindest einige Nachteile der bekannten Systeme nicht aufweisen. Es ist insbesondere eine Aufgabe der vorliegenden Erfindung eine computerisierte Steuervorrichtung und ein computerimplementiertes Verfahren zur Steuerung einer Druckproduktverarbeitungsanlage mit Sammelanlage vorzuschlagen, welche ein verbessertes und koordinierteres Belegen von Zuförderern der Sammelanlage ermöglichen um eine hohe Nettoleistung der Druckproduktverarbeitungsanlage zu erzielen.

Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass zur Steuerung einer Druckproduktverarbeitungsanlage, welche eine Sammelanlage mit einem Förderer und einer Vielzahl von Zuförderern zur Erstellung von Produktkollektionen aus von den Zuförderern zugeführten Produkten verschiedener Art umfasst, in einer computerisierten Steuervorrichtung ein oder mehrere Belegungspläne erzeugt und gespeichert werden, die für die Zuförderer jeweils eine zeitliche Reihenfolge der Produkte angeben, die für eine definierte Produktion von mehreren verschiedenen, jeweils aus mehreren zugeführten Produkten zu erstellenden Produktkollektionen, vom Zuförderer dem Förderer zuzuführen sind. In der computerisierten Steuervorrichtung werden basierend auf den Belegungsplänen die zuzuführenden Produkte bestimmt, die jeweils von einem der Zuförderer dem Förderer zur Erstellung der Produktkollektionen zuzuführen sind. Informationen über die bestimmten zuzuführenden Produkte werden über einen drahtlosen Kommunikationskanal jeweils an eine mobile Anzeigevorrichtung zum Anzeigen der zum betreffenden Zuförderer zuzuführenden Produkte übermittelt. Die Informationen über die bestimmten zuzuführenden Produkte werden über den drahtlosen Kommunikationskanal beispielsweise jeweils an die Anzeigevorrichtung einer mobilen Transportvorrichtung zum Herbeiführen der zuzuführenden Produkte zum betreffenden Zuförderer übermittelt. Durch die Erzeugung von Belegungsplänen für die Zuförderer der Sammelanlage und die darauf basierende Ermittlung von Produkten, die von den Zufördern sequentiell dem Förderer zuzuführen sind, wird ermöglicht dem Bedienpersonal respektive den mobilen Transportvorrichtungen anzuzeigen, welches Produkt jeweils von einem der Zuförderer zum aktuellen und/oder bevorstehenden Zeitpunkt dem Förderer zuzuführen ist. Dadurch kann das Bedienpersonal respektive die mobilen Transportvorrichtungen früh und rechtzeitig darüber informiert werden, mit welchen Produkten die Zuförderer zu belegen sind.

In einer bevorzugten Ausführungsvariante werden, während der definierten Produktion, die von den Zuförderern dem Förderer zugeführten Produkte erfasst, in der computerisierten Steuervorrichtung wird, basierend auf den Belegungsplänen, ein bei einem der Zuförderer bevorstehender Wechsel der Art des zuzuführenden Produkts bestimmt, und Informationen über das Produkt, mit dem der Zuförderer für den bevorstehenden Wechsel zu belegen ist, werden über den drahtlosen Kommunikationskanal an die mobile eine Anzeigevorrichtung übermittelt. Die Informationen über das Produkt, mit dem der Zuförderer für den bevorstehenden Wechsel zu belegen ist, werden über den drahtlosen Kommunikationskanal beispielsweise an die Anzeigevorrichtung einer mobilen Transportvorrichtung übermittelt. Somit wird die Anzahl der Produkte, die gefördert werden, bestimmt und fortwährend aktualisiert. Durch die Belegungspläne und die laufende Erfassung der von den Zuförderern zugeführten Produkte wird ermöglicht, für jeden Zuförderer mit Bezug zum zugeordneten Belegungsplan, den aktuellen Produktionsstand und einen bevorstehenden Produktwechsel zu ermitteln. Somit können das Bedienpersonal respektive die mobilen Transportvorrichtungen früh und rechtzeitig über einen bevorstehenden Produktwechsel und dem damit verbunden Weg- und Herbeitransport von Produktpaletten vom/zum Zuförderer informiert werden.

In einer Ausführungsvariante wird in der computerisierten Steuervorrichtung, während der definierten Produktion und basierend auf den Belegungsplänen, eine Zeitdauer bis zu einem bei einem der Zuförderer bevorstehenden Wechsel der Art des zuzuführenden Produkts bestimmt, und die Zeitdauer über den drahtlosen Kommunikationskanal an die mobile Anzeigevorrichtung übermittelt. Die Zeitdauer wird über den drahtlosen Kommunikationskanal beispielsweise an die Anzeigevorrichtung einer mobilen Transportvorrichtung übermittelt. Durch die zusätzliche Information über die Zeitdauer respektive den Zeitpunkt des bevorstehenden Produktwechsels wird dem Bedienpersonal respektive den mobilen Transportvorrichtungen ermöglicht den Weg- und Herbeitransport von Produktpaletten und die anschliessende Belegung des Zuförderers zeitlich zu planen und rechtzeitig auszuführen.

Vorzugsweise werden eine grafische Darstellung und die Orientierung der zuzuführenden Produkte auf einer Anzeige des betreffenden Zuförderers dargestellt, und Informationen über die zuzuführenden Produkte werden zur grafischen Darstellung der zuzuführenden Produkte über den drahtlosen Kommunikationskanal an die mobile Anzeigevorrichtung übermittelt, beispielsweise an die Anzeigevorrichtung einer mobilen Transportvorrichtung.

In einer bevorzugten Ausführungsvariante werden die Belegungspläne für die definierte Produktion in der computerisierten Steuervorrichtung gemäss definierten Optimierungsregeln erzeugt. Vorzugsweise werden aus den definierten Optimierungsregeln die zur Erzeugung der Belegungspläne zu verwendenden Optimierungsregeln basierend auf einem von mehreren möglichen Optimierungszielen bestimmt. Durch die Optimierung der Belegung der Zuförderer wird die Produktion auf der Druckproduktverarbeitungsanlage entsprechend den ausgewählten Optimierungszielen verbessert, d.h. die zur Verfügung stehenden Ressourcen, wie Produktionszeit, Bedienpersonal, Druckproduktverarbeitungsanlage, Anlageteile, etc., werden entsprechend einem ausgewählten Optimierungsziel möglichst effizient genutzt.

In einer weiteren Ausführungsvariante werden in der computerisierten Steuervorrichtung mehrere Sätze mit verschiedenen Belegungsplänen für die Zuförderer für verschiedene mögliche Produktionsbedingungen erzeugt und gespeichert. Dabei definieren die Produktionsbedingungen jeweils eine mögliche Konfiguration der Druckproduktverarbeitungsanlage, die Verfügbarkeit von Bedienpersonal der Druckproduktverarbeitungsanlage und/oder ein Optimierungsziel. In der computerisierten Steuervorrichtung werden für die definierte Produktion aktuelle Produktionsbedingungen der Druckproduktverarbeitungsanlage erfasst und einer der Sätze der Belegungspläne wird basierend auf den aktuellen Produktionsbedingungen für die definierte Produktion gewählt. Die Erzeugung und Speicherung von Belegungsplänen für verschiedene Produktionsbedingungen ermöglicht eine effiziente und flexible Konfiguration der Zuförderer für eine Produktion bei unterschiedlichen Produktionsbedingungen. Dabei können auch Störungssituationen, die extern zur Druckproduktverarbeitungsanlage auftreten, beispielsweise ein verspätetes Erscheinen eines Lastkraftwagens, berücksichtigt werden.

In einer Ausführungsvariante werden in der computerisierten Steuervorrichtung während der definierten Produktion aktuelle Produktionsbedingungen der Druckproduktverarbeitungsanlage erfasst, welche die aktuelle Konfigurationen der Druckproduktverarbeitungsanlage, die aktuelle Verfügbarkeit von Bedienpersonal der Druckproduktverarbeitungsanlage und/oder ein aktuelles Optimierungsziel definieren, und die Belegungspläne werden in der computerisierten Steuervorrichtung während der definierten Produktion basierend auf den aktuellen Produktionsbedingungen der Druckproduktverarbeitungsanlage angepasst. Die Anpassung von Belegungsplänen während der Produktion an aktuelle Produktionsbedingungen ermöglicht eine dynamische Re-Konfiguration der Zuförderer an geänderte Produktionsbedingungen. Dabei können sowohl anlageinterne als auch externe Einfluss- und Störgrössen berücksichtigt werden.

In einer weiteren Ausführungsvariante werden in der computerisierten Steuervorrichtung für die definierte Produktion mehrere Sätzen mit verschiedenen Belegungsplänen für die Zuförderer erzeugt. Die definierte Produktion wird für die verschiedenen Sätze der verschiedenen Belegungspläne simuliert und dabei jeweils eine anlagenspezifisch simulierte Produktionsdauer bestimmt. Der Satz von Belegungsplänen mit der kürzesten simulierten Produktionsdauer wird für die definierte Produktion verwendet.

Neben einer computerisierten Steuervorrichtung und einem computerimplementierten Verfahren zur Steuerung einer Druckproduktverarbeitungsanlage bezieht sich die vorliegende Erfindung überdies auf ein Computerprogrammprodukt, das ein greifbares, computerlesbares Speichermedium mit gespeichertem Computercode umfasst. Der Computercode ist eingerichtet, einen oder mehrere Prozessoren der Steuervorrichtung so zu steuern, dass die Prozessoren respektive die Steuervorrichtung ein Verfahren zur Steuerung einer Druckproduktverarbeitungsanlage ausführen, welche eine Sammelanlage mit einem Förderer und einer Vielzahl von Zuförderern zur Erstellung von Produktkollektionen aus von den Zuförderern zugeführten Produkten verschiedener Art umfasst. Dabei erzeugen und speichern die Prozessoren respektive die Steuervorrichtung einen oder mehrere Belegungspläne, die für die Zuförderer jeweils eine zeitliche Reihenfolge der Produkte angeben, welche für eine definierte Produktion von mehreren verschiedenen, jeweils aus mehreren zugeführten Produkten zu erstellenden Produktkollektionen, vom Zuförderer dem Förderer zuzuführen sind. Die Prozessoren respektive die Steuervorrichtung bestimmen basierend auf den Belegungsplänen die zuzuführenden Produkten, die jeweils von einem der Zuförderer dem Förderer zur Erstellung der Produktkollektionen zuzuführen sind, und übermitteln Informationen über die bestimmten zum betreffenden Zuförderer zuzuführenden Produkte über einen drahtlosen Kommunikationskanal jeweils an eine mobile Anzeigevorrichtung, beispielsweise an die Anzeigevorrichtung einer mobilen Transportvorrichtung zum Herbeiführen der zuzuführenden Produkte zum betreffenden Zuförderer.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
- Figur 1:: zeigt ein Blockdiagramm einer schematisch dargestellten computergesteuerten Druckproduktverarbeitungsanlage, welche eine Sammelanlage mit einem Förderer und mehreren Zuförderern zum Erstellen von Produktkollektionen umfasst.
- Figur 2:: zeigt ein Blockdiagramm einer schematisch dargestellten weiteren computergesteuerten Druckproduktverarbeitungsanlage, welche eine Sammelanlage mit einem Förderer und mehreren Zuförderern zum Erstellen von Produktkollektionen und mehrere nachgeschaltete Stapelstationen umfasst.
- Figur 3:: zeigt ein Blockdiagramm, welches schematisch eine computerisierte Steuervorrichtung illustriert, welche zur Steuerung einer Druckproduktverarbeitungsanlage eingerichtet ist, die eine Sammelanlage mit einem Förderer und einer Vielzahl von Zuförderern zur Erstellung von Produktkollektionen umfasst.
- Figur 4:: zeigt ein Flussdiagramm, welches ein Beispiel einer Sequenz von Schritten zur Erzeugung von Belegungsplänen für eine Vielzahl von Zuförderern einer Druckproduktverarbeitungsanlage zur Erstellung von Produktkollektionen aus von den Zuförderern zugeführten Produkten illustriert.
- Figur 5:: zeigt ein Flussdiagramm, welches ein Beispiel einer Sequenz von Schritten zur Konfiguration und Steuerung einer Druckproduktverarbeitungsanlage für die Erstellung von Produktkollektionen illustriert, die von einer Vielzahl von Zuförderern zugeführt werden.
- Figur 6:: zeigt ein Blockdiagramm einer schematisch dargestellten weiteren computergesteuerten Druckproduktverarbeitungsanlage, welche eine Sammelanlage mit einem Förderer und mehreren mit Kennvorrichtungen versehenen Zuförderern zum Erstellen von Produktkollektionen umfasst.

### Wege zur Ausführung der Erfindung

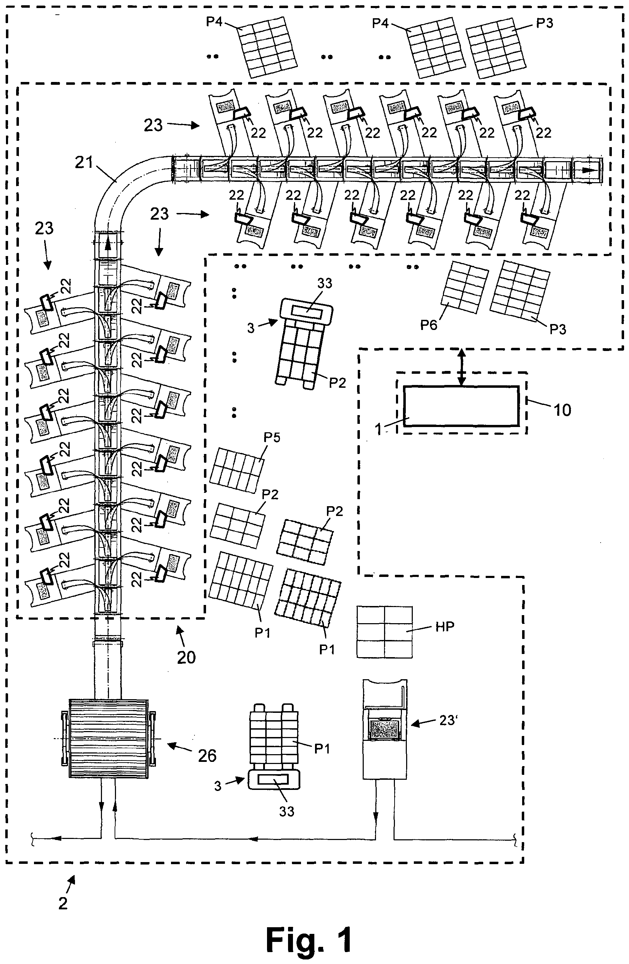

In den Figuren 1, 2 und 6 bezieht sich das Bezugszeichen 2 auf eine computergesteuerte Druckproduktverarbeitungsanlage mit einer Sammelanlage 20. Die Sammelanlage 20 umfasst mindestens einen Förderer 21 und eine Vielzahl von Zuförderern 23, welche dem Förderer 21 abhängig von ihrer Produktbelegung jeweils unterschiedliche Produkte P1, P2, P3, P4, P5, P6 (P1-P6) zuführen. Die Sammelanlage 20 umfasst beispielsweise mehrere Dutzend oder über hundert Zuförderer 23. Je nach Anwendung sind mehrere Zuförderer 23 mit dem gleichen Produkt belegt (Splitbetrieb), beispielsweise bei dicken Produkten P3, P4, wo die manuelle Bestückung eines einzelnen Zuförderers 23 durch Bedienpersonal der Druckproduktverarbeitungsanlage 2 zu langsam ist, um die pausenlose Zuführung von Produkten P1-P6 zum Förderer 21 durch einen einzigen Zuförderer 23 abzudecken (unterbruchsfreie Produktion), oder als Backup, um allfällige Ausfälle von Zuförderern 23 auszugleichen (maximale Produktionssicherheit). Typischerweise ist die Anzahl unterschiedlicher Produkte P1-P6, die während einer Produktion für die Erstellung verschiedener Produktkollektionen zugeführt werden sollen, grösser als die Anzahl der Zuförderer 23 der Druckproduktverarbeitungsanlage 2.

In verschiedenen Ausführungsvarianten ist die Sammelanlage 20 eingerichtet durch Zusammentragen, Einstecken oder Sammeln von Produkten oder durch andere produktzusammenführende Operationen Zusammenführungen von Produkten zu Erstellen, die wir hier als Produktkollektionen bezeichnen, und umfasst entsprechend einen Förderer 21 mit einer Zusammentragstrecke mit umlaufenden Fördermitteln, eine Sammeltrommel, einen Bandförderer zum Zusammentragen von Schuppenströmen oder eine Sammelstrecke, jeweils mit oder ohne Kollektionsträger, beispielsweise Greifer.

Die Beispiele der in den Figuren 1, 2 und 6 dargestellten Sammelanlagen 20 umfassen jeweils einen Förderer 21 mit mehreren seriell angeordneten Kollektionsträgern, beispielsweise Greifer, Sockel, Taschen oder Sattel, welche entlang einer geschlossenen Linie zyklisch an den Zuförderern 23 vorbeigeführt werden und die zugeführten Produkte P1-P6 aufnehmen. Durch die sequentielle Zuführung der Produkte P1-P6 wird auf dem Förderer 21, insbesondere auf respektive in den Kollektionsträgern, eine Produktkollektion zusammengestellt.

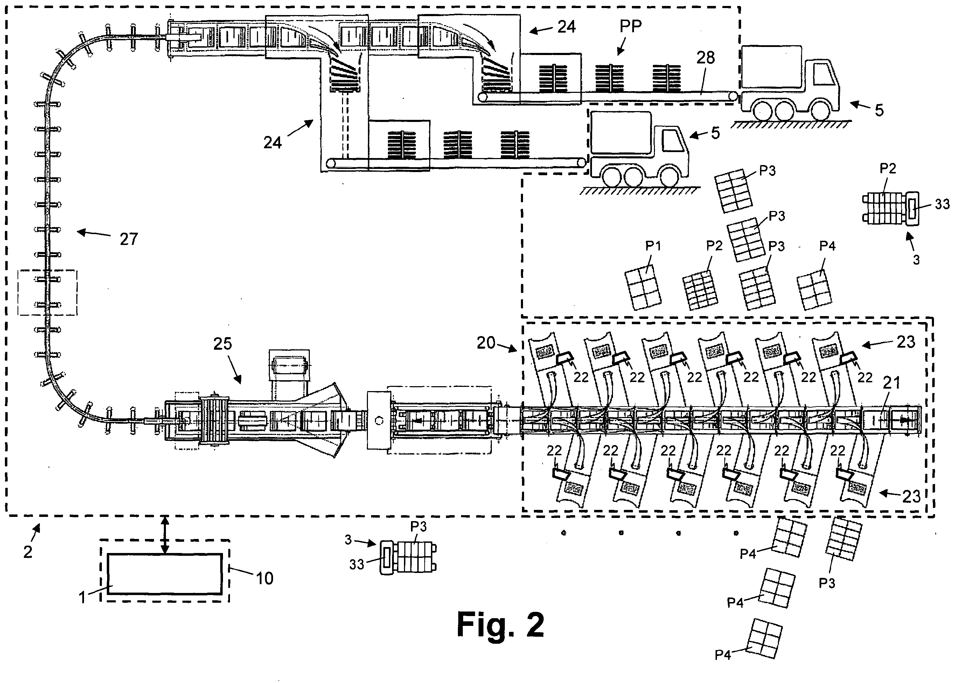

Wie in den Figuren 1, 2 und 6 schematisch dargestellt ist, umfasst die Druckproduktverarbeitungsanlage 2 in verschiedenen Ausführungsvarianten eine oder mehrere Weiterverarbeitungsanlagen, die beispielsweise über eine Übergabeeinheit der Sammelanlage 20 nachgeschaltet ist. Solche Weiterverarbeitungsanlagen umfassen beispielsweise eine oder mehrere Stapelstationen 24, eine Verpackungsanlage 25, z.B. eine Folieranlage, eine Anlage 26 zum Einstecken von zusätzlichen Produkten P1-P6 oder Produktkollektionen in ein Hauptprodukt HP von einem entsprechenden Zuförderer 23', beispielsweise eine rotierende Einstecktrommel, eine Anlage zum Heften
Die vollständig zusammengestellten und gegebenenfalls weiter bearbeiteten Produktkollektionen werden, beispielsweise wie in Figur 2 illustriert, über einen weiteren Förderer 27, beispielsweise ein Kettenförderer mit Greifern, einer von beispielsweise mehreren Stapelstation 24 zugeführt, welche ein Paket PP mit einer definierten Anzahl Produktkollektionen erstellt und für den Abtransport einem wegführenden Förderer 28 zuführt, beispielsweise ein Bandförderer, welcher das Paket zur Auslieferung entsprechend einer geplanten Route einem zugeordneten Lastkraftwagen 5 zuführt.

Zur Zählung von zugeführten Produkten P1-P6, fehlerhaften Produktkollektionen, vollständigen und überschüssigen Produktkollektionen, und/oder erstellten Paketen PP umfasst die Druckproduktverarbeitungsanlage 2 zudem verschiedene nicht dargestellte Zähler. Dabei werden fehlerhafte Produktkollektionen in der Druckproduktverarbeitungsanlage 2 durch verschiedene nicht dargestellte Sensoren detektiert und beispielsweise durch eine Makulaturweiche vom Förderer 21 weg einer Makulaturausschleusung zuführt.

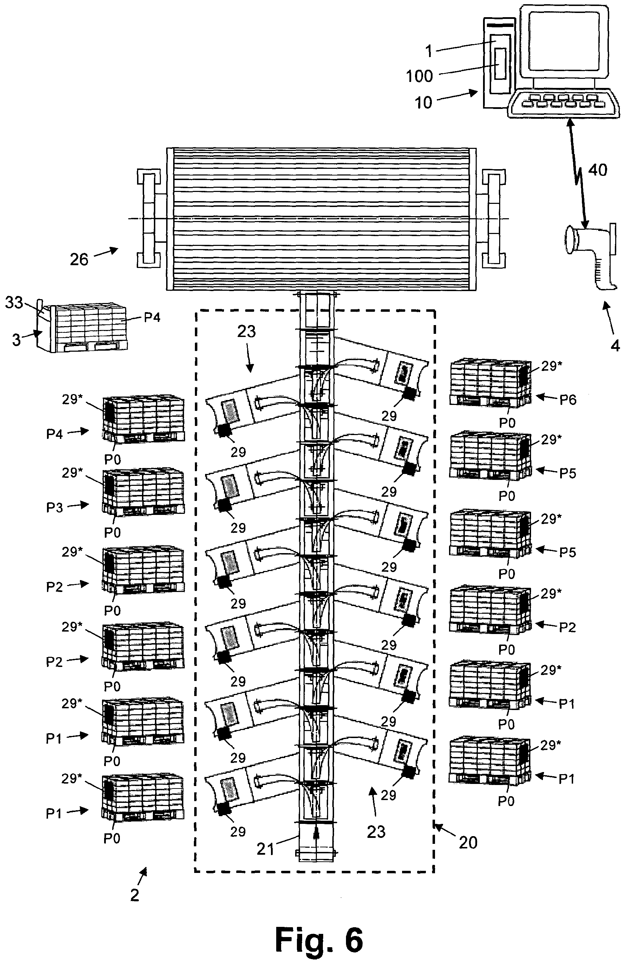

In den Figuren 1 und 2 beziehen sich die Bezugszeichen 22 auf Anzeigen, welche jeweils bei oder an einem der Zuförderer 23 für das Bedienpersonal der Druckproduktverarbeitungsanlage 2 gut sichtbar angebracht sind. Die Anzeigen 22 sind beispielsweise LCD oder LED Anzeigen. In der Figur 6 beziehen sich die Bezugszeichen 29 auf Kennvorrichtungen, welche je nach Ausführungsvariante als maschinenlesbare Kennungen, beispielsweise ein Strichcode oder eine RFID (Radio Frequency IDentifier), oder als Kennungsleser, beispielsweise ein Strichcodeleser, ein RFID-Leser oder ein Bildsensor (Digitalkamera), ausgeführt sind. Zum besseren Verständnis soll hier darauf hingewiesen werden, dass abhängig von der Ausführungsvariante sowohl die in den Figuren 1 und 2 dargestellten Zuförderer 23 jeweils mit Kennvorrichtungen 29 versehen sein können als auch die in Figur 6 dargestellten Zuförderer 23 jeweils mit einer Anzeige 22 versehen sein können, auch wenn dies in den Figuren 1, 2 respektive 6 nicht explizit dargestellt ist.

Zur Steuerung umfasst die Druckproduktverarbeitungsanlage 2 einen Steuercomputer 10, der mit den verschiedenen Komponenten und Einheiten der Druckproduktverarbeitungsanlage 2 über Kommunikationsverbindungen verbunden ist, insbesondere mit der Sammelanlage 20, dem Förderer 21, den zuführenden Zuförderern 23 und zugeordneten Anzeigen 22, und allfälligen Weiterverarbeitungsanlagen, steuerbaren Übergabeeinheiten und/oder Makulaturweichen, Stapelstationen 24, weiteren Förderern 27, 28 und den erwähnten Sensoren und Zählern. Wie in der Figur 6 schematisch dargestellt ist umfasst der Steuercomputer 10 ein Funktionsmodul, Prüfmodul 100, dessen Funktion später detailliert beschrieben wird.

Der Steuercomputer 10 ist eingerichtet, die auf dem Förderer 21 beförderten Produktkollektionen respektive unvollständigen Kollektionen hinsichtlich deren Positionen auf dem Förderer 21, deren Inhalt und Struktur (d.h. Produkte und Reihenfolge), dem vorgesehenen und/oder geänderten Kollektionstyp (mit bestimmter Kollektionsstruktur), und/oder der Anzahl durchlaufener Zyklen auf dem Förderer 21 zu verfolgen (Trackinginformation). Zu Erstellung von individualisierten Produktkollektionen, die beispielsweise mit individueller Adresse eines Empfängers und/oder inhaltlich mit individuell auf den betreffenden Empfänger ausgerichteten Inhalt und somit Struktur der Produktkollektion versehen sind, wird eine Produktkollektion vom Steuercomputer 10 über seine gesamte Erstellungszeit vom ersten zuführenden Zuförderer 23 auf dem Förderer 21 bis zur Stapelung auf einem bestimmten Paket PP in der Druckproduktverarbeitungsanlage 2 identifiziert und verfolgt.

Das Bezugszeichen 1 bezieht sich auf eine computerisierte Steuervorrichtung, welche als Teil des Steuercomputers 10 oder auf einem oder mehreren separaten, mit dem Steuercomputer 10 verbundenen Computer ausgeführt ist. Die Steuervorrichtung 1 ist mittels Kommunikationsverbindungen direkt oder über den Steuercomputer 10 mit den Komponenten und Einheiten der Druckproduktverarbeitungsanlage 2 verbunden, insbesondere mit den zuführenden Zuförderern 23 und zugeordneten Anzeigen 22.

Die Steuervorrichtung 1 und/oder der Steuercomputer 10 sind vorzugsweise mit einem übergeordneten, nicht dargestellten computerisierten Leitsystem verbunden. Die Steuervorrichtung 1 und/oder der Steuercomputer 10 sind zudem über einen oder mehrere drahtlose (kontaktlose) Kommunikationskanäle mit mobilen Anzeigevorrichtungen 33 verbindbar, beispielsweise über ein WLAN (Wireless Local Area Network), über Bluetooth oder eine andere funkbasierte Kommunikationsverbindung, zum Beispiel mit mobilen Anzeigevorrichtungen 33, die jeweils in eine mobile Transportvorrichtung 3 eingebaut oder als tragbares computerisiertes Handgerät ausgeführt sind.

Die mobilen Transportvorrichtungen 3 sind Transportfahrzeuge, beispielsweise Hubwagen 3, insbesondere Niederflurhubwagen, zum Transportieren von Paletten P0 mit jeweils einem oder mehreren Stapeln von jeweils einem der Produkte P1-P6. Die mobilen Transportvorrichtungen 3 verfügen beispielsweise über einen elektrischen Antrieb und werden je nach Ausführungsvariante von einer Bedienperson oder durch eine automatische Transportsteuerung gesteuert. Die mobilen Transportvorrichtungen 3 respektive computerisierten Handgeräte umfassen jeweils ein Kommunikationsmodul für den Datenaustausch über den drahtlosen Kommunikationskanal mit der Steuervorrichtung 1 und/oder dem Steuercomputer 10. Die mobilen Transportvorrichtungen 3 respektive computerisierten Handgeräte umfassen zudem jeweils eine Anzeigevorrichtung (Anzeige) 33 zur Darstellung von Informationen über die Produkte P1-P6, die zu den Zuförderern 23, 23' hintransportiert werden müssen, insbesondere eine grafische Darstellung des zu transportierenden Produkts P1-P6 und eine grafische und/oder numerische Darstellung des Zeitpunkts und/oder der Zeitdauer bis das betreffende Produkt P1-P6 bei einem bestimmten Zuförderer 23, 23' verfügbar sein muss. Vorzugsweise umfassen die mobilen Transportvorrichtungen 3 respektive die computerisierten Handgeräte zudem Eingabemittel zur Bestätigung von erledigten und/oder Anforderung von neuen Produkttransportaufträgen.

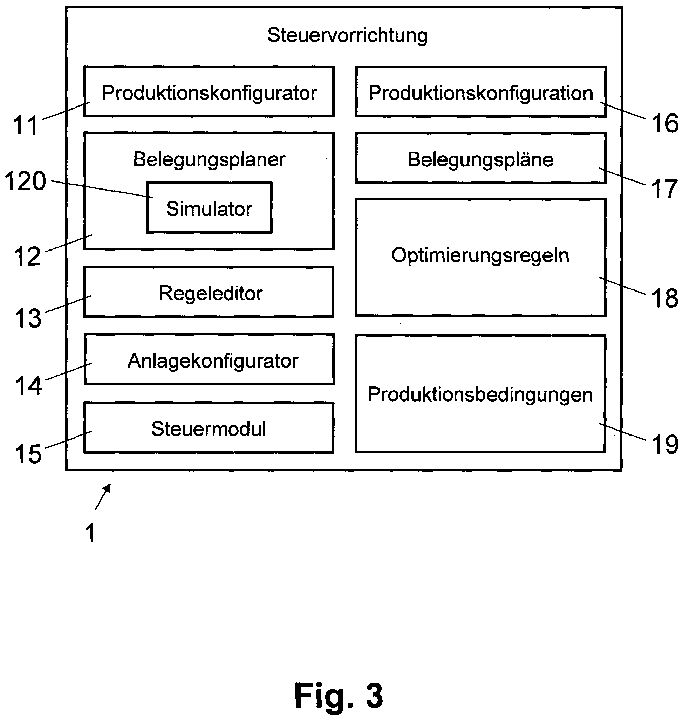

Wie in der Figur 3 schematisch dargestellt ist, umfasst die Steuervorrichtung 1 verschiedene Funktionsmodule, insbesondere einen Produktionskonfigurator 11, einen Belegungsplaner 12, einen Simulator 120, einen Regeleditor 13, einen Anlagekonfigurator 14 und ein Steuermodul 15, sowie Datenspeicher respektive Programmspeicher zur Speicherung von Produktionskonfigurationen 16, Belegungsplänen 17, Optimierungsregeln 18 und Produktionsbedingungen 19. In einer Ausführungsvariante umfasst die Steuervorrichtung 1 zudem das oben im Zusammenhang mit dem Steuercomputer 10 erwähnte Prüfmodul 100. Die Produktionskonfigurationen 16 umfassen Produktionskonfigurationsparameter, welche mindestens eine Produktion von mehreren verschiedenen, jeweils aus mehreren zugeführten Produkten P1-P6 zu erstellenden Produktkollektionen definieren, denen jeweils ein entsprechender Kollektionstyp zugeordnet ist. Die Produktionskonfigurationsparameter umfassen überdies Routendaten, welche die Auslieferung erstellter Pakete PP definieren und eine Zuordnung von Produktkollektionen zu Routen umfassen. Die Belegungspläne 17 definieren für die Zuförderer 23 jeweils eine zeitliche Reihenfolge der Produkte P1-P6, die vom betreffenden Zuförderer 23 zur Erstellung der definierten Produktkollektionen einer Produktion dem Förderer 21 zuzuführen sind. Die Optimierungsregeln 18 umfassen Daten und/oder ausführbaren/interpretierbaren Code, welche die Erstellung von gemäss einem oder mehreren definierten Optimierungszielen möglichst optimierten Belegungsplänen für die Zuförderer 21 bestimmen. Die Produktionsbedingungen 19 umfassen Anlagekonfigurationsparameter, welche die Konfiguration der Druckproduktverarbeitungsanlage 2 definieren, sowie Angaben über die Verfügbarkeit von Bedienpersonal der Druckproduktverarbeitungsanlage 2 und mindestens ein Optimierungsziel.

Die Funktionsmodule der Steuervorrichtung 1 respektive des Steuercomputers 10 sind vorzugsweise als programmierte Softwaremodule ausgeführt, welche Computerprogrammcode umfassen zur Steuerung von einem oder mehreren Prozessoren eines oder mehrerer Computer. Der Computerprogrammcode ist auf einem oder mehreren fest oder entfernbar mit den Prozessoren verbundenen (greifbaren) computerlesbaren Speichermedien gespeichert. Der Fachmann wird jedoch verstehen, dass die Funktionsmodule in alternativen Ausführungsvarianten teilweise oder vollständig durch Hardwarekomponenten ausgeführt werden können.

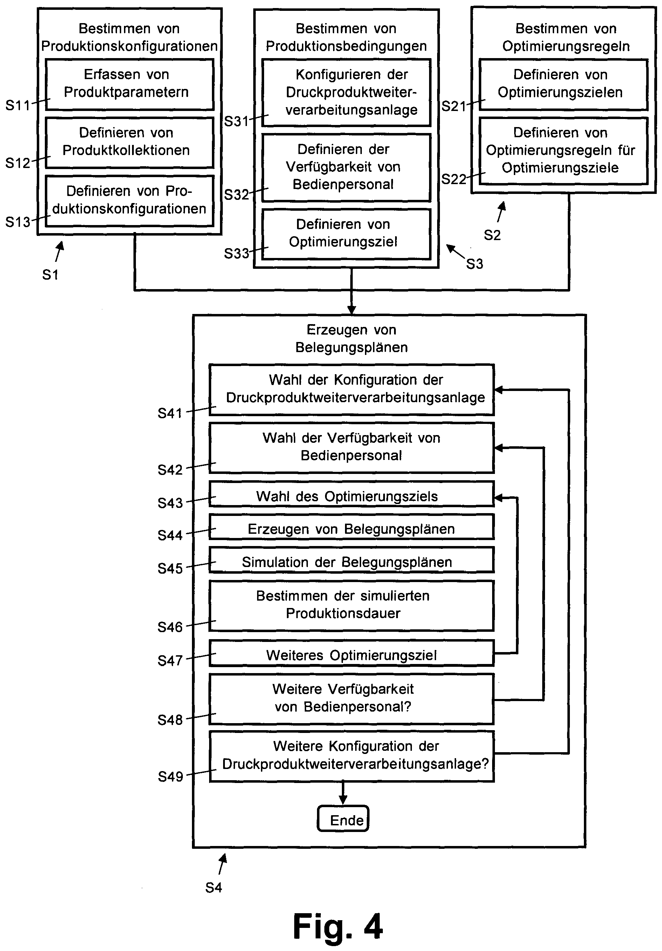

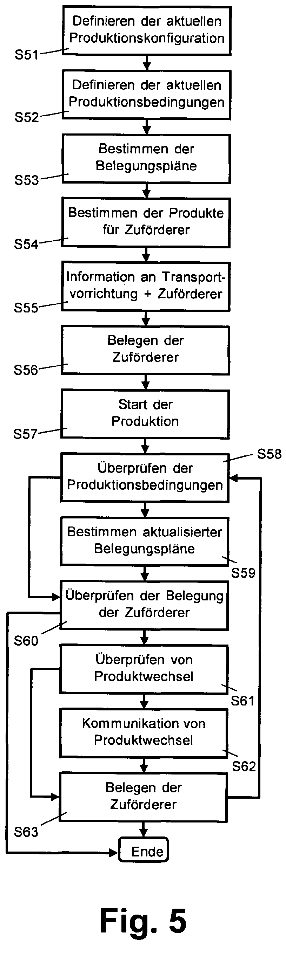

Die verschiedenen Funktionen, für der Ausführung die Funktionsmodule eingerichtet sind, werden in den folgenden Abschnitten mit Bezug zu den Figuren 4 und 5 beschrieben, welche Flussdiagramme mit Beispielen von Sequenzen möglicher Schritte für die Erzeugung von Belegungsplänen 16 respektive für die Konfiguration und Steuerung der Druckproduktverarbeitungsanlage 2 illustrieren.

Der Produktionskonfigurator 11 ist eingerichtet, im Schritt S1 Produktionskonfigurationen 16 zu bestimmen.

Dazu erfasst und speichert der Produktionskonfigurator 11 im Schritt S11 Produktparameter mit Angaben zu den einzelnen Produkten P1-P6. Die Produktparameter umfassen beispielsweise die geometrischen Abmessungen, insbesondere Dicke sowie Breite und Länge, das Gewicht, die Art, eine Produktidentifizierung und ein darstellbares elektronisches Bild eines Produkts P1-P6.

Im Schritt S12 erfasst und speichert der Produktionskonfigurator 11 zudem Definitionen von Produktkollektionen (Kollektionstyp) mit Angaben über die Struktur einer Produktkollektion, welche jeweils eine Identifizierung der einzelnen Produkte P1-P6 und gegebenenfalls eine vorgeschriebene, und daher überwachte, Reihenfolge der Produkte P1-P6 in der Produktkollektion umfasst.

Im Schritt S13 erfasst und speichert der Produktionskonfigurator 11 Definitionen von Produktionskonfigurationen 16 mit Produktionskonfigurationsparametern, welche mindestens eine Produktion, also einen Produktionslauf, von mehreren verschiedenen Produktkollektionen definieren. In einer Ausführungsvariante erfasst und speichert der Produktionskonfigurator 11 Produktionskonfigurationen 16, welche mehrere Teilproduktionen umfassen, wobei jede der Teilproduktionen einer in sich geschlossenen Produktion von mehreren verschiedenen, jeweils aus mehreren zugeführten Produkten zu erstellenden Produktkollektionen entspricht, d.h. eine Produktionsdauer mit einem Produktionsanfang und einem Produktionsende aufweist, in welcher keine Produktkollektionen einer anderen Teilproduktion erstellt werden.

Die Produktionskonfigurationsparameter umfassen jeweils die Anzahl und eine Identifizierung (Kollektionstyp) der verschiedenen Produktkollektionen in einer Produktion respektive Teilproduktion. Je nach Ausführungsvariante umfassen die Produktionskonfigurationsparameter zudem Routeninformationen für die effiziente Auslieferung von Paketen PP mit Produktkollektionen und/oder Adressinformationen für die Auslieferung von Paketen PP respektive Produktkollektionen .

In einer Variante werden mindestens gewisse der Produktionskonfigurationsparameter vom übergeordneten Leitsystem an den Produktionskonfigurator 11 übermittelt.

Der Produktionskonfigurator 11 umfasst vorzugsweise eine (beispielsweise grafische) Benutzerschnittstelle mit Anzeige und Bedienungselementen für die Eingabe durch Hinzufügen, Ändern und/oder Löschen der oben beschriebenen Produktionskonfigurationen 16, beispielsweise bei der Vorbereitung auf die Produktion und/oder während der Produktion. Der Produktionskonfigurator 11 ist überdies eingerichtet Produktionskonfigurationsparameter, beispielsweise Produktparameter, in der Form von Dateien entgegenzunehmen und zu speichern.

Der Regeleditor 13 ist eingerichtet, im Schritt S2 Optimierungsregeln 18 zu bestimmen.

Dazu erfasst und speichert der Regeleditor 13 im Schritt S21 Definitionen von Optimierungszielen. Die Optimierungsziele geben eine Optimierungspriorität an, gemäss welcher eine möglicht optimierte Belegung der Zuförderer 21 für eine Produktion respektive Teilproduktion geplant werden soll. Mögliche Optimierungsziele umfassen beispielsweise "minimale Anzahl Bedienpersonal", "verfügbare Anzahl Bedienpersonal", "unterbruchsfreie Produktion", "unterbruchsfreie Teilproduktion", "maximale Produktionssicherheit", "minimale Produktionszeit", "maximale Produktionsgeschwindigkeit", "minimaler Ausschuss", "optimale Abstapelung gemäss Routenplanung", "Vermeidung von Stillstand bei Produktwechsel", etc.

Im Schritt S22 erfasst und speichert der Regeleditor 13 Definitionen von Optimierungsregeln 18, die jeweils einem der definierten Optimierungsziele zugeordnet werden können. Die Optimierungsregeln 18 umfassen beispielsweise eine Regelidentifizierung, eine Regelbezeichnung und vorzugsweise ausführbaren respektive interpretierbaren Regelcode, beispielsweise Regelprogramme mit ausführbaren respektive interpretierbaren Regelinstruktionen. Der Regelcode kann beispielsweise als Datei eingelesen oder mittels eines Text- oder Programmeditors eingegeben werden. Eine allgemeine, beispielsweise mit "Homogenitätsmaximierung" bezeichnete Optimierungsregel umfasst beispielsweise Regelcode, welcher die zu erstellenden Produktkollektionen einer Produktion oder Teilproduktion so sortiert, dass die Produkte, die am häufigsten zuzuführen sind, möglichst unterbruchsfrei und ohne Produktwechsel von dem oder den selben Zuförderern 23 zugeführt werden. Eine allgemeine, beispielsweise mit "unterbruchsfreier Produktwechsel" bezeichnete Optimierungsregel umfasst beispielsweise Regelcode, welcher einen Produktwechsel bei einem Zuförderer im Belegungsplan zeitlich so ansetzt, dass er in eine Produktionsphase fällt, in welcher die zu erstellenden Produktkollektionen durch Zuförderung von Produkten P1-P6 anderer Zuförderer 23 übernommen wird, so dass keine Produktionslücke entsteht.

Der Regeleditor 13 umfasst vorzugsweise eine (beispielsweise grafische) Benutzerschnittstelle mit Anzeige und Bedienungselementen für die Eingabe durch Hinzufügen, Ändern und/oder Löschen der oben beschriebenen Optimierungsregeln 18, vor der Produktionsplanung. Typischerweise sind die Optimierungsregeln 18 relativ statisch und werden selten verändert, wenn sie sich im Produktionsbetrieb oder basierend auf einer Simulation mittels des Simulators 120 bewährt haben. Dazu werden den Optimierungsregeln 18 vorzugsweise quantitative Erfahrungswerte zugeordnet gespeichert, beispielsweise eine Produktionsgeschwindigkeit als Anzahl verarbeitete Produkte und/oder erstellte Produktkollektionen per Produktionsdauer, Personaleffizienz als Anzahl Bedienpersonen per Anzahl verarbeiteter Produkte und/oder erstellter Produktkollektionen, Belegungseffizienz als Anzahl von Produktwechsel bei den Zuförderern 23 per Produktionsdauer, Anzahl verarbeiteter Produkte und/oder erstellter Produktkollektionen, Produktionseffizienz als Anzahl Produktionsunterbrüche per Anzahl verarbeiteter Produkte, erstellter Produktkollektionen und/oder Produktionsdauer, etc.

Der Anlagekonfigurator 14 ist eingerichtet, im Schritt S3 Produktionsbedingungen 19 zu bestimmen. Der Anlagekonfigurator 14 ist insbesondere eingerichtet, Produktionsbedingungen 19 für mehrere verschiedene Produktionsszenarien zu bestimmen, zu speichern und wieder abzurufen.

Dazu erfasst und speichert der Anlagekonfigurator 14 im Schritt S31 Anlagekonfigurationsparameter, welche die Konfiguration der Druckproduktverarbeitungsanlage 2 definieren. Die Anlagekonfigurationsparameter umfassen beispielsweise Angaben über die Anzahl, den Typ und/oder die Funktion der Zuförderer 23, die Position der Zuförderer 23 auf dem Förderer 21, z.B. eine sequentielle Positionsnummer, die Anzahl und den Typ von betriebsbereiten und/oder zuschaltbaren Stapelstationen 24, die Position der zuschaltbaren Stapelstationen 24 mit Bezug zum Förderer 21, 27, die Anzahl Makulaturweichen, die Position der Makulaturweichen, die Anzahl, Art (Funktion) und/oder die Position der Weiterverarbeitungsanlagen und zuschaltbaren Verarbeitungsvorrichtungen, etc.

Im Schritt S32 erfasst und speichert der Anlagekonfigurator 14 zudem die Verfügbarkeit von Bedienpersonal der Druckproduktverarbeitungsanlage 2. Die Verfügbarkeitsangaben umfassen beispielsweise die Anzahl von Bedienpersonen, die für die manuelle Belegung von Zuförderern 23 mit den zuzuführenden Produkten während bestimmten Zeitperioden verfügbar sind respektive verfügbar sein sollen.

Im Schritt S33 erfasst und speichert der Anlagekonfigurator 14 ein definiertes Optimierungsziel, gemäss welchem eine möglicht optimierte Belegung der Zuförderer 21 für eine Produktion respektive Teilproduktion geplant werden soll. Es können auch mehrere, sich möglicherweise widersprechende Optimierungsziele mit jeweils zugeordneter unterschiedlicher Priorität erfasst und gespeichert werden. Eines oder mehrere Optimierungsziele werden beispielsweise aus einer Liste mit definierten Optimierungszielen ausgewählt. Die Optimierungsziele geben somit eine Optimierungspriorität an und umfassen beispielsweise "minimale Anzahl Bedienpersonal", "verfügbare Anzahl Bedienpersonal", "unterbruchsfreie Produktion", "unterbruchsfreie Teilproduktion", "maximale Produktionssicherheit", "minimale Produktionszeit", "maximale Produktionsgeschwindigkeit", "minimaler Ausschuss", "optimale Abstapelung gemäss Routenplanung", "Vermeidung von Stillstand bei Produktwechsel", etc.

In einer Variante werden mindestens gewisse der Produktionsbedingungen 19 vom übergeordneten Leitsystem an den Anlagekonfigurator 14 übermittelt.

Der Anlagekonfigurator 14 umfasst vorzugsweise eine (beispielsweise grafische) Benutzerschnittstelle mit Anzeige und Bedienungselementen für die Eingabe durch Hinzufügen, Ändern und/oder Löschen der oben beschriebenen Produktionsbedingungen 19, beispielsweise bei der Installation der Druckproduktverarbeitungsanlage 2, bei der Vorbereitung auf die Produktion und/oder während der Produktion. In einer Variante ist der Anlagekonfigurator 14 zudem eingerichtet, wenigstens gewisse Anlagekonfigurationsparameter automatisch durch Abfrage über Kommunikationsverbindungen von den verschiedenen Komponenten der Druckproduktverarbeitungsanlage 2 zu erfassen und zu speichern, einerseits statische andererseits aber auch dynamische Anlagekonfigurationsparameter der Druckproduktverarbeitungsanlage 2, wodurch die Anlagekonfiguration zur Produktionszeit insbesondere auch bezüglich verfügbarer respektive ausfallender Systemkomponenten automatisch aktualisiert wird. Die dynamische Erfassung von Anlagekonfigurationsparameter erfolgt beispielsweise periodisch und/oder auf Anfrage respektive Benutzerinstruktion. Die Erfassung und Speicherung der Produktionsbedingungen für verschiedene Produktionsszenarien erfolgt vorzugsweise "off-line", nicht während einem Produktionslauf.

Der Belegungsplaner 12 ist eingerichtet, im Schritt S4 für eine bestimmte, durch eine gespeicherte Produktionskonfiguration 16 definierte Produktion respektive Teilproduktion Belegungspläne 17 zu erzeugen.

Dazu wählt der Belegungsplaner 12 im Schritt S41 eine der durch die gespeicherten Anlagekonfigurationsparameter definierten Konfigurationen der Druckproduktweiterverarbeitungsanlage 2.

Im Schritt S42 wählt der Belegungsplaner 12 eine der definierten Varianten des verfügbaren Bedienpersonals der Druckproduktweiterverarbeitungsanlage 2.

Im Schritt S43 wählt der Belegungsplaner 12 eines der definierten Optimierungsziele respektive einen definierten Satz unterschiedlich priorisierter oder gewichteter Optimierungsziele.

Die in den Schritten S41, S42 und S43 gewählten Parameter definieren Produktionsbedingungen 19 für ein konkretes Produktionsszenario.

Im Schritt S44 erzeugt der Belegungsplaner 12 für die bestimmte Produktion respektive Teilproduktion und die in den Schritten S41, S42 und S43 ausgewählten Produktionsbedingungen Belegungspläne 17 für die Zuförderer 23. Dabei erzeugt der Belegungsplaner 12 die Belegungspläne 17 basierend auf den Optimierungsregeln 18, die dem in Schritt S43 gewählten Optimierungsziel zugeordnet sind. Wenn einem Optimierungsziel mehrere Optimierungsregeln zugeordnet sind, werden diejenigen Optimierungsregeln gewählt, denen die höchsten Erfahrungswerte zugeordnet sind. Die Belegungspläne 17 werden durch die Ausführung respektive Interpretation der bestimmten Optimierungsregeln 18 erzeugt. Die Belegungspläne 17 definieren für die Zuförderer 23 jeweils eine zeitliche Reihenfolge der Produkte P1-P6, die vom betreffenden Zuförderer 23 zur Erstellung der Produktkollektionen der Produktion dem Förderer 21 zuzuführen sind. Je nach Ausführungsvariante sind die Belegungspläne 17 für sämtliche Zuförderer 23 in einem gemeinsamen Belegungsmasterplan zusammengefasst oder in individuelle Belegungsteilpläne aufgeteilt.

Ein Belegungsplan 17 bestimmt für einen Zuförderer 23 die Zuführsequenz der Produkte P1-P6. Dabei wird beispielsweise, wie in Tabelle 1 illustriert, die Anzahl Produkte P1, P3, P4 angegeben, die ohne Unterbrechung durch ein anderes Produkt, dem Zuförderer 23 zugeführt werden soll, bevor ein Produktwechsel und daher eine Belegung des Zuförderers 23 mit einem anderen Produkt P1-P6 vorgenommen werden muss.

**Tabelle 1**

| Belegungsplan für einen Zuförderer | | |
|---|---|---|
| Zeitpunkt/Takt | Produkt/Pause | Anzahl/Dauer |
| 1 | P3 | 4000 |
| 4001 | - | 200 |
| 4201 | P1 | 2000 |
| 6201 | - | 100 |
| 6301 | P4 | 1500 |
| 7801 | - | 200 |
| ... | ... | ... |

Dabei kann im Belegungsplan 17 beispielsweise die zeitliche Sequenz neben der Reihenfolge der Produkte in einer Belegungsplantabelle auch durch weitere Angaben über Zuführzeitpunkt respektive den ersten Zuführtakt angegeben werden. Allfällig geplante Zuführunterbrüche "-" zwischen zwei aufeinanderfolgenden zuzuführenden Produkten werden explizit angegeben oder ergeben sich implizit aus dem angegebenen Zuführzeitpunkt respektive Zuführtakt.

Der Satz von individuellen Belegungsplänen 17 für die Zuförderer respektive der Belegungsmasterplan werden den in den Schritten S41, S42 und S43 definierten Produktionsbedingungen 19 der Produktion respektive Teilproduktion zugeordnet gespeichert.

Im Schritt S46 wird die Produktion gemäss den im Schritt S44 erzeugten Belegungsplänen 17 durch den Simulator 120 für die zugeordneten Produktionsbedingungen 19 simuliert. Dabei wird für Belegungswechsel bei einem Zuförderer 23 jeweils eine definierte erwartete Zeitdauer eines dadurch verursachten Zuführunterbruchs zugrunde gelegt, welcher beispielsweise vom Typ des neu zuzuführenden Produkts P1-P6 abhängt.

Im Schritt S47 wird basierend auf der durchgeführten Simulation eine erwartete Produktionsdauer ermittelt und den Belegungsplänen 17 zugeordnet gespeichert.

Abhängig von den anzuwendenden Optimierungsregeln 18 werden für die ausgewählten Produktionsbedingungen durch Wiederholung der Schrittsequenz S44, S45, S46 mehrere verschiedene Belegungspläne 17 für die Zuförderer 23 erzeugt und entsprechende Produktionsdauerwerte ermittelt und gespeichert. Dabei definieren die Optimierungsregeln 18 in einer Ausführungsvariante bestimmte Variablen und Parameter, deren Wert jeweils in mehrfachen Durchläufen beispielsweise durch einen Zufallsgenerator oder gemäss vorgegebenen Regeln bestimmt wird, so dass die Erzeugung von unterschiedlichen Sätzen von Belegungsplänen 17 mit jeweils unterschiedlicher simulierter Produktionsdauer bewirkt wird. Schliesslich wird für die ausgewählten Produktionsbedingungen 19 der Satz von Belegungsplänen 17 mit der kürzesten simulierten Produktionsdauer als bevorzugte Variante gespeichert.

Im Schritt S 47 überprüft der Belegungsplaner 12, ob weitere, noch nicht berücksichtigte Optimierungsziele gespeichert sind, denen weitere Optimierungsregeln 18 zugeordnet sind. Falls mindestens ein weiteres Optimierungsziel vorhanden ist fährt der Belegungsplaner 12 im Schritt S43 fort, um gemäss den durch das weitere Optimierungsziel bestimmten Optimierungsregeln 18 weitere Belegungspläne 17 für die Produktion zu bestimmen. Andernfalls fährt der Belegungsplaner 12 im Schritt S48 fort.

Im Schritt S48 überprüft der Belegungsplaner 12, ob weitere, noch nicht berücksichtigte Varianten des verfügbaren Bedienpersonals der Druckproduktweiterverarbeitungsanlage 2 gespeichert sind. Falls mindestens eine weitere Variante von verfügbarem Bedienpersonal vorhanden ist fährt der Belegungsplaner 12 im Schritt S42 fort, um für diese Variante von verfügbarem Bedienpersonal weitere Belegungspläne 17 für die Produktion zu bestimmen. Andernfalls fährt der Belegungsplaner 12 im Schritt S49 fort.

Im Schritt S 49 überprüft der Belegungsplaner 12, ob weitere, noch nicht berücksichtigte Anlagekonfigurationsparameter gespeichert sind, die eine weitere Konfiguration der Druckproduktweiterverarbeitungsanlage 2 definieren. Falls mindestens eine weitere Konfiguration der Druckproduktweiterverarbeitungsanlage 2 definiert ist, fährt der Belegungsplaner 12 im Schritt S41 fort, um für diese Konfiguration weitere Belegungspläne 17 für die Produktion zu bestimmen. Andernfalls beendet der Belegungsplaner 12 die Erzeugung von Belegungsplänen 17.

Das Steuermodul 15 ist eingerichtet, die Druckproduktverarbeitungsanlage 2 für und während einer Produktion zu konfigurieren und zu steuern.

Dazu aktiviert das Steuermodul 15 den Produktionskonfigurator 11, wie in Figur 5 illustriert, um im Schritt S51 die aktuelle Produktionskonfiguration 16 für die geplante Produktion respektive Teilproduktion zu definieren. Die aktuelle Produktionskonfiguration 16 wird mit dem Produktionskonfigurator 11, wie oben im Zusammenhang mit Schritt S1 (Schritte S11, S12 und S13) beschrieben, durch Eingabe individueller Parameter definiert oder dadurch, dass eine bereits definierte Produktionskonfiguration 16 einer Produktion respektive Teilproduktion ausgewählt wird.

Im Schritt S52 aktiviert das Steuermodul 15 den Anlagekonfigurator 14, um die aktuellen Produktionsbedingungen 19 zu definieren. Die aktuellen Produktionsbedingungen 19 werden mit dem Anlagekonfigurator 14, wie oben im Zusammenhang mit Schritt S3 (Schritte S31, S32 und S33) beschrieben, durch Eingabe individueller Parameter definiert oder dadurch, dass bereits definierte Produktionsbedingungen 19 ausgewählt werden.

Im Schritt S53 bestimmt das Steuermodul 15 die zu verwendenden Belegungspläne 17 für die Zuförderer 23 hinsichtlich der aktuellen Produktionskonfiguration 16 und den aktuellen Produktionsbedingungen 19. Dazu wählt das Steuermodul 15, die Belegungspläne 17, die den aktuellen Produktionskonfiguration 16 und den aktuellen Produktionsbedingungen 19 gegebenenfalls bereits zugeordnet sind, oder aktiviert den Belegungsplaner 12 um die Belegungspläne 17, wie oben im Zusammenhang mit Schritt S4 (Schritte S44, S45 und S46) beschrieben, für die aktuelle Produktionskonfiguration 16 und die aktuellen Produktionsbedingungen 19 zu erzeugen.

Im Schritt S54 bestimmt das Steuermodul 15 aus den zu verwendenden Belegungsplänen 17 für die Zuförderer 23 jeweils das erste Produkt P1-P6, mit dem der Zuförderer 23 für die Produktion zu belegen ist. Im Beispiel des Belegungsplans der Tabelle 1 ist dies das Produkt P3, das vom betreffenden Zuförderer 23 zuerst dem Förderer 21 zugeführt werden muss.

Im Schritt S55 zeigt das Steuermodul 15 jeweils auf den Anzeigen 22 der Zuförderer 23 das Produkt P1-P6 an, mit dem die betreffenden Zuförderer 23 als erstes, beispielsweise vor Beginn der Produktion, belegt werden müssen. Das Produkt P1-P6 wird beispielsweise als Textinformation und/oder als Bild, vorzugsweise basierend auf einem gespeicherten digitalen Bild, des Produkts P1-P6 oder einer symbolischen Darstellung des Produkts P1-P6, beispielsweise ein Firmenlogo der für das Produkt P1-P6 verantwortlichen Firma, auf der Anzeige 22 dargestellt, wobei vorzugsweise auch die Orientierung des Produkts P1-P6 dargestellt wird, in der die Belegung des Zuförderers 23 mit dem Produkt P1-P6 erfolgen soll. Das Steuermodul 15 übermittelt zudem Informationen über die zuzuführenden Produkt P1-P6 als Produkttransportauftrag über den drahtlosen Kommunikationskanal an die mobilen Anzeigevorrichtungen 33 der Transportvorrichtungen 3 respektive der computerisierten Handgeräte, die beispielsweise in der Lagerverwaltung oder beim Wareneingang eingesetzt werden. Vorzugsweise werden die zuzuführenden Produkte P1-P6, die von den mobilen Transportvorrichtungen 3 zu den Zuförderern 23 hintransportiert werden sollen, jeweils grafisch auf der Anzeige 33 der betreffenden mobilen Transportvorrichtung 3 (respektive des computerisierten Handgeräts) dargestellt. Die anfänglich zuzuführenden Produkte P1-P6 werden beispielsweise den mobilen Transportvorrichtungen 3 so zugeteilt, dass Zuförderer 23, die jeweils in einem gemeinsamen definierten zusammenhängenden örtlichen Bereich angeordnet sind, von der selben mobilen Transportvorrichtung 3 bedient werden.

Im Schritt S56 erfolgt die manuelle Belegung der Zuförderer 23 mit den angezeigten, zuzuführenden Produkten P1-P6 durch das Bedienpersonal. Dazu werden zunächst die Paletten P0 mit den zuzuführenden Produkten P1-P6 mittels der mobilen Transportvorrichtungen 3 zu den Zuförderern 23 hintransportiert, und dann die Zuförderer 23 mit den Produkten P1-P6 ab den Paletten P0 belegt. Vorzugsweise werden der Steuervorrichtung 1 und/oder dem Steuercomputer 10 sowohl die Ausführung des Produkttransportauftrags, d.h. die erfolgte Bereitstellung einer oder mehrerer angeforderter Paletten P0, als auch die erfolgte Belegung der Zuförderer 23 mit den Produkten P1-P6 bestätigt. Die Bestätigung erfolgt beispielsweise manuell durch das Bedienpersonal oder durch entsprechende Sensoren oder die automatische Steuerung der Transportvorrichtung 3.

Im Schritt S57 erfolgt der Start der Produktion, wobei die Produkte P1-P6 durch die Zuförderer 23, gemäss der der Produktionskonfiguration entsprechenden Steuerung durch den Steuercomputer 10 respektive die Steuervorrichtung 1, dem Förderer 21 zur Erstellung von Produktkollektionen zugeführt werden.

Im Schritt S58 prüft das Steuermodul 15, ob eine Änderung der aktuellen Produktionsbedingungen 19 vorliegt, beispielsweise aufgrund einer beabsichtigten, z.B. durch manuellen Eingriff gesetzten, oder durch eine Fehlersituation respektive Störung verursachten Änderung von Anlagekonfigurationsparameter und damit der Konfiguration der Druckproduktverarbeitungsanlage 2, aufgrund einer geänderten Anzahl verfügbaren Bedienpersonals der Druckproduktverarbeitungsanlage 2 oder aufgrund eines geänderten Optimierungsziels. Mit anderen Worten, das Steuermodul 15 respektive der Anlagekonfigurator 14 überwachen und protokollieren laufend die Produktion und den Zustand der Druckproduktverarbeitungsanlage 2 um gegebenenfalls die aktuellen Produktionsbedingungen 19 entsprechend anzupassen, beispielsweise bei Störungen bei einem Zuförderer 23, bei Verarbeitungsvorrichtungen oder beim Abtransport, bei Routenanpassungen aufgrund von geänderten Wetterbedingungen oder Verfügbarkeitsänderungen eines Lastkraftwagens, etc. Bei unveränderten Produktionsbedingungen 19 fährt das Steuermodul 15 im Schritt S60 fort, andernfalls im Schritt S59.

Im Schritt S59 bestimmt das Steuermodul 15 aufgrund der geänderten Produktionsbedingungen angepasste, aktualisierte Belegungspläne 17. Das Steuermodul 15 erzeugt dabei für die geänderten aktuellen Produktionsbedingungen 19 einen Satz mit angepassten Belegungsplänen 17 für die Zuförderer 23 wobei bereits zugeführte Produkte P1-P6 respektive erzeugte Produktkollektionen und gegebenenfalls auch bereits bestehende Belegungen der Zuförderer 23 berücksichtigt und nicht erneut erzeugt respektive geändert werden. Dabei wird als allgemeine Optimierungsregel für die Aktualisierung von Belegungsplänen 17 bei geänderten Produktionsbedingungen eine möglichst geringe Anzahl von Produktwechseln bei der Belegung von Zuförderern 23 angestrebt. Situationsabhängig wird auch eine laufende Teilproduktion mit den bestehenden Belegungsplänen 17 zu Ende geführt und durch das Steuermodul 15 erst für die nächstfolgende Teilproduktion ein neuer Satz von Belegungsplänen 17 für die aktuellen Produktionsbedingungen gewählt, respektive die Belegungspläne 17 werden erst ab dem Zeitpunkt respektive der Sequenznummer der nächstfolgenden Teilproduktion geändert, wenn gewisse definierte Bedingungen erfüllt sind, beispielsweise verbleibende Produktionszeit für die laufende Teilproduktion unter einem definierten Schwellwert, produktionstechnische Durchführbarkeit der laufenden Teilproduktion bei den geänderten Produktionsbedingungen, etc.

Im Schritt S60 prüft das Steuermodul 15, ob gemäss den aktuellen gegebenenfalls geänderten Belegungsplänen 17 eine weitere Belegung der Zuförderer 23 mit Produkten P1-P6 erforderlich ist. Dazu werden beispielsweise auch Sensoren bei den Zuförderern 23 eingesetzt, welche die aktuelle Belegung eines Zuförderers 23 bestimmen und überprüfen. Abhängig von der Ausführung des Belegungssensors wird dabei eine Belegungsmenge als Längenmass, Gewicht und/oder Stückzahl angegeben und in einer Variante auch das konkrete Produkt P1-P6 bestimmt, mit dem der betreffende Zuförderer 23 belegt ist. Wenn der Belegungsplan 17 eines Zuförderers 23 noch nicht abgearbeitet ist, also der Zuförderer 23 für die laufende Produktion respektive Teilproduktion noch mit zusätzlichen Produkten P1-P16 belegt werden muss, fährt das Steuermodul 15 im Schritt S61 fort.

Im Schritt S61 prüft das Steuermodul 15 für die Zuförderer 23 basierend auf den Belegungsplänen 17 und dem aktuellen Status der laufenden Produktion respektive Teilproduktion jeweils, ob und wann ein Produktwechsel beim betreffenden Zuförderer 23 bevorsteht. Dabei wird basierend auf der aktuellen Anzahl erstellter Produktkollektionen, für die der betreffende Zuförderer 23 Produkte P1-P6 zuführt, und basierend auf dem dem betreffenden Zuförderer 23 zugeordneten Belegungsplan 17 bestimmt, wie viele der Produkte P1-P6 in der aktuellen Belegung des Zuförderers 23 vom Zuförderer 23 noch zuzuführen sind, bevor der Zuförderer 23 ein anderes Produkt P1-P6 zuzuführen hat. Das Steuermodul 15 prüft zudem für die Zuförderer 23, bei denen ein Produktwechsel bevorsteht, gemäss definierten Bedingungen, ob der bevorstehende Produktwechsel dem Bedienpersonal der Druckproduktverarbeitungsanlage 2 bereits schon angezeigt werden soll oder nicht. Ein Produktwechsel wird beispielsweise angezeigt, wenn er unmittelbar nach der Abarbeitung der aktuellen Belegung des betreffenden Förderers ausgeführt werden muss. Das Steuermodul 15 bestimmt zudem, beispielsweise in Abhängigkeit vom Transportweg respektive der Transportzeit eines Produkts P1-P6 von seinem Lagerstandort zum betreffenden Zuförderer 23 und/oder der aktuellen Auslastung der mobilen Transportvorrichtungen 3, ob bereits schon eine Kommunikation eines bevorstehenden Produktwechsels und damit ein Produkttransportauftrag an einen oder mehrere mobile Transportvorrichtungen 3 (respektive computerisierte Handgeräte) übermittelt werden soll. In einer Variante wird jeder bevorstehende Produktswechsel mit einer definierten Vorwarnzeit, beispielsweise zehn oder fünfzehn Minuten, als Produkttransportauftrag an eine der mobilen Transportvorrichtungen 3 kommuniziert. Als generelle Regel gilt, dass eine oder mehrere Paletten P0 mit dem richtigen zuzuführenden Produkt zum richtigen Zeitpunkt, also wenn gemäss dem Belegungsplan eine Belegung mit dem zuzuführenden Produkt vorgesehen ist, am richtigen Ort, also beim vorgesehenen Zuförderer 23, bereitgestellt sind. Die Vorwarnzeit für einen Produkttransportauftrag für den Herbeitransport einer Palette P0 durch eine mobile Transportvorrichtung 3 für einen Produktwechsel respektive Nachschub eines zuzuführenden Produkts bei einem Zuförderer 23 ist länger als diejenige zum Ankündigen eines Produktwechsels auf einer Anzeige 22 bei einem Zuförderer 23, beispielsweise der doppelte Wert der Zeitdauer, die nach Übermittlung eines Produkttransportauftrags von einer mobilen Transportvorrichtung 3 für den Transport zum betreffenden Zuförderer 23 benötigt wird.

Im Schritt S62 übermittelt das Steuermodul 15 einen Produkttransportauftrag für einen bevorstehenden Produktwechsel respektive Produktnachschub jeweils an die mobile Anzeigevorrichtung 33 einer der Transportvorrichtungen 3 (respektive der computerisierten Handgeräte). Abhängig von der Vorwarnzeit übermittelt das Steuermodul 15 zudem Informationen über einen bevorstehenden Produktwechsel an den betroffenen Zuförderer 23. Dabei wird eine Identifizierung des betreffenden Förderers 23, eine Identifizierung des hinzutransportierenden respektive zuzufördernden Produkts P1-P6, eine grafische Darstellung dieses Produkts P1-P6, und eine Angabe des Zeitpunkts und/oder der Zeitdauer bis das betreffende Produkt P1-P6 bei einem bestimmten Zuförderer 23, 23' verfügbar sein muss übermittelt (Lieferzeitpunkt). Das hinzutransportierende Produkt P1-P6 und die Zeitabgaben werden auf der Anzeige 33 der betreffenden mobilen Transportvorrichtung 3 respektive des betreffenden computerisierten Handgeräts angezeigt. Das Steuermodul 15 zeigt gegebenenfalls auch auf der Anzeige 22 der betroffenen Zuförderer 23 einen bevorstehenden Produktwechsel an. Dabei wird auf der Anzeige 22 vorzugsweise ein Bild des Produkts P1-P6 angezeigt, mit dem der Zuförderer 23 zu belegen ist. In einer Variante wird zudem die Orientierung des Produkts P1-P6 angezeigt, in der die Belegung des betreffenden Produkts P1-P6 beim Zuförderer 23 erfolgen soll. In einer Ausführungsvariante zeigt das Steuermodul 15 auf der Anzeige 22 zudem eine Zeitangabe über den bevorstehenden Produktwechsel dar, beispielsweise die Anzahl verbleibender Produkte P1-P6, die vor dem Produktwechsel vom Zuförderer 23 noch dem Förderer 21 zugeführt werden, oder eine davon abhängige Zeitdauer. Die Anzeige 22 wird laufend aktualisiert, so dass dem Bedienpersonal ein mit der Produktion synchronisierter abnehmender Zeitwert respektive eine abnehmende Produktzahl, beispielsweise als Zahlenwert oder grafisch, angezeigt werden.

In einer weiteren Ausführungsvariante ist das Steuermodul 15 eingerichtet, beispielsweise gemäss entsprechenden Steuerbefehlen, die vom Bedienpersonal beim Zuförderer 23, beispielsweise über eine Tastatur oder eine berührungsempfindliche Anzeige, zu einem beliebigen Zeitpunkt während der Produktion eingegeben werden, die Restdauer bis zum nächsten Wechsel der Art des vom betreffenden Zuförderer 23 zuzuführenden Produkts P1-P6 auf der Anzeige 22 anzuzeigen. Dabei wird beispielsweise die Anzahl verbleibender Belegungen des Zuförderers 23 mit dem aktuellen Produkt P1-P6, als Zahlenwert oder grafisch, angezeigt, bevor vom Bedienpersonal die Belegung mit dem nächstfolgenden Produkt P1-P6 einer anderen Art ausgeführt werden muss. In einer Variante zeigt das Steuermodul 15, beispielsweise auf Instruktion durch das Bedienpersonal, auf den Anzeigen 22 der Zuförderer 23 jeweils den ganzen oder einen aktuellen Ausschnitt des zugeordneten Belegungsplans 17 an. Der Belegungsplan 17 mit der Sequenz der zeitlich aufeinanderfolgenden Produkte P3-P1-P4 unterschiedlicher Art wird beispielsweise in grafischer Form dargestellt, wie im Beispiel der Tabelle 2 illustriert ist, wobei die verschiedenen Produkte P1-P6 jeweils in unterschiedlicher Farbe und mit Mengenangabe dargestellt werden und der aktuelle Zeitpunkt respektive Produktionsstand durch eine Markierung angegeben ist. Im Beispiel der Tabelle 2 zeigt die Markierung einen Produktionsstand an, bei welchem das Produkt P3 durch den betreffenden Zuförderer 23 bereits abgearbeitet und dem Förderer 21 zugeführt wurde, und bei welchem zur Zeit das Produkt P1 zugeführt wird.

**Tabelle 2**

| Produkt und Menge | | | | |
|---|---|---|---|---|
| P3 | | P1 | | P4 |
| 4000 | | 2000 | | 1500 |
| ----------------------------------------------------------------------\|(Markierung) | | | | |

Im Schritt S63 belegt das Bedienpersonal die Zuförderer 23 mit dem auf der Anzeige 22 als aktuell angezeigten Produkt in der angegebenen Orientierung. Bei einem Produktwechsel muss dazu durch die mobilen Transportvorrichtungen 3 rechtzeitig eine oder mehrere (Transport-) Palette P0 mit einem oder mehreren darauf angeordneten Stapeln des zuzuführenden Produkts P1-P6 zum betreffenden Zuförderer 23 hintransportiert werden, beispielsweise gesteuert durch eine Bedienperson oder automatisch durch die Transportsteuerung. Die Transportsteuerung ist beispielsweise eingerichtet, die mobile Transportvorrichtung 3 bei einem eingegangenen Produkttransportauftrag so zu steuern, dass sie automatisch eine (oder nacheinander mehrere) Palette P0 mit einem oder mehreren darauf angeordneten Stapeln des zuzufördernden Produkts P1-P6 bei einem Lagerstandort bezieht, diese auflädt, anhebt und zum betreffenden Zuförderer 23 hintransportiert, beispielsweise entlang vordefinierter Bahnen. Die Ausführung des Produkttransportauftrags, und die erfolgte Belegung der Zuförderer 23 mit den zuzuführenden Produkten P1-P6 werden der Steuervorrichtung 1 und/oder dem Steuercomputer 10 jeweils bestätigt.

Wie in der Figur 6 dargestellt ist, weisen die Zuförderer 23 jeweils eine Kennvorrichtung 29 auf. Die Kennvorrichtungen 29 ermöglichen die Überprüfung der Zuordnung von Produkten P1-P6, die zur Belegung eines betreffenden Zuförderers 23 auf einer oder mehreren Paletten P0 herbeigeführt werden, zu dem betreffenden Zuförderer 23. Die vorgesehene, korrekte Zuordnung von einem Produkt P1-P6 einer bestimmten Produktart zu einem der Zuförderer 23 ist im Steuercomputer 10 respektive in der Steuervorrichtung 1 gespeichert. Die Zuordnung ist typischerweise zeitabhängig und ändert sich im Laufe der Produktion. Im Zusammenhang mit den obenstehenden Erläuterungen ist die Zuordnung für eine Produktion respektive Teilproduktion beispielsweise durch die Belegungspläne 17 definiert.

Die Überprüfung der Zuordnung basiert auf einer maschinenlesbaren Kennung 29* des Produkts P1-P6, beispielsweise eine Produktkennung 29* in Form eines Strichcodes oder einer RFID, welche direkt auf dem Produkt P1-P6, an der Palette P0 mit dem darauf angeordneten Produkt P1-P6 oder auf einem Stapel des Produkts P1-P6 angebracht ist. Die maschinenlesbare Kennung 29* des Produkts P1-P6 wird mit einer mobilen Lesevorrichtung 4 (Handscanner) oder mit der Kennvorrichtung 29 des Zuförderers 23 erfasst, die in diesem Fall als Kennlesevorrichtung ausgeführt ist. In einer weiteren Variante wird die maschinenlesbare Kennung des Produkts P1-P6 durch ein Bild des Produkts P1-P6 repräsentiert, das mittels eines Bildsensors, z.B. eine Digitalkamera, aufgenommen wird, wobei der Bildsensor als mobile Lesevorrichtung 4 ausgeführt ist oder Teil der Kennvorrichtung 29 ist.

In den Varianten, in denen die Kennung eines Produkts P1-P6 (Produktkennung) 29* durch die fest mit dem Zuförderer 23 verbundene, als Kennlesevorrichtung respektive Bildsensor ausgeführte Kennvorrichtung 29 erfasst wird, erfolgt zur Überprüfung der Zuordnung eine Übertragung von Prüfdaten mit der erfassten Produktkennung und einer dem Zuförderer 23 zugeordneten Zufördereridentifizierung, die beispielsweise in der Kennvorrichtung 29 gespeichert ist, von der Kennvorrichtung 29 über eine Kommunikationsverbindung an das Prüfmodul 100.

In den Varianten, in denen die Kennung eines Produkts P1-P6 (Produktkennung) 29* durch eine mobile, nicht mit dem Zuförderer 23 verbundenen Lesevorrichtung oder Bildsensor aufgenommen und erfasst wird, wird zur Überprüfung der Zuordnung des Produkts P1-P6 zu einem Zuförderer 23 auch eine Kennung des betreffenden Zuförderers 23 erfasst, wobei die am Zuförderer 23 angebrachte Kennvorrichtung 29 zu diesem Zweck als maschinenlesbare Kennung ausgeführt ist. Anschliessend erfolgt zur Überprüfung der Zuordnung eine Übertragung von Prüfdaten mit der erfassten Produktkennung und der erfassten maschinenlesbaren Kennung des Zuförderers 23, von der mobilen Lesevorrichtung 4 über eine kontaktlose (drahtlose) oder kontaktbasierte (verdrahtete) Kommunikationsverbindung 40 an das Prüfmodul 100, beispielsweise über ein WLAN (Wireless Local Area Network) oder über Bluetooth.

Die Überprüfung der Zuordnung von Produkt P1-P6 zu Zuförderer 23 erfolgt durch das Prüfmodul 100 aufgrund der übermittelten Prüfdaten. Das Prüfmodul ist je nach Ausführungsvariante im Steuercomputer 10 respektive in der Steuervorrichtung 1 oder als Alternative bei den Zuförderern 23 angeordnet. Wenn das Prüfmodul 100 aufgrund der gespeicherten Zuordnung von Produkt P1-P6 zu Zuförderer 23, beispielsweise auf der Basis der zugeordneten Belegungspläne 17, feststellt, dass das durch die empfangenen Prüfdaten bestimmte Produkt P1-P6 und der durch die Prüfdaten bestimmte Zuförderer 23 nicht der gespeicherten Zuordnung entspricht, die für den aktuellen Zeitpunkt oder eine definierte Zeitdauer ab dem aktuellen Zeitpunkt vorgesehen ist, sendet das Prüfmodul 100 eine entsprechende Fehlermeldung über die Kommunikationsverbindung 40 zur mobilen Lesevorrichtung 4 und/oder zum Zuförderer 23, beispielsweise zur Darstellung auf einer Anzeige der mobilen Lesevorrichtung 4 und/oder des Zuförderers 23, und/oder zur akustischen Wiedergabe eines Warnsignals. Somit kann eine falsche Belegung der Zuförderer 23 mit unvorgesehenen Produkten P1-P6, insbesondere zum falschen Zeitpunkt, vermieden werden. In einer Variante, in welcher die Produktkennung durch den fest mit dem Zuförderer 23 verbundenen Bildsensor erfasst wird, kann überdies die Zuförderung von unvorhergesehenen Produkten P1-P6 gestoppt und verhindert werden, mit welchen der betreffende Zuförderer 23 irrtümlicherweise belegt wurde.

Abschliessend soll angeführt werden, dass in der Beschreibung zwar Computerprogrammcode spezifischen funktionalen Modulen zugeordnet wurde und dass die Ausführung von Schritten in einer bestimmten Reihenfolge dargestellt wurde, dass der Fachmann jedoch verstehen wird, dass der Computerprogrammcode unterschiedlich strukturiert und die Reihenfolge von mindestens gewissen Schritten geändert werden kann, ohne dabei vom Schutzgegenstand abzuweichen.

## Patentansprüche

1. Eine computerisierte Steuervorrichtung (1) zur Steuerung einer Druckproduktverarbeitungsanlage (2), welche eine Sammelanlage (20) mit einem Förderer (21) und einer Vielzahl von Zuförderern (23) zur Erstellung von Produktkollektionen aus von den Zuförderern (23) zugeführten Produkten (P1, P2, P3, P4, P5, P6) verschiedener Art umfasst, **gekennzeichnet durch**
einen Belegungsplaner (12) zum Erzeugen und Speichern von einem oder mehreren Belegungsplänen (17), die für die Zuförderer (23) jeweils eine zeitliche Reihenfolge der Produkte (P1, P2, P3, P4, P5, P6) angeben, die für eine definierte Produktion von mehreren verschiedenen, jeweils aus mehreren zugeführten Produkten (P1, P2, P3, P4, P5, P6) zu erstellenden Produktkollektionen, vom Zuförderer (23) dem Förderer (21) zuzuführen sind, und
ein Steuermodul (15), das eingerichtet ist, basierend auf den Belegungsplänen (17) die zuzuführenden Produkte (P1, P2, P3, P4, P5, P6) zu bestimmen, die jeweils von einem der Zuförderer (23) dem Förderer (21) zur Erstellung der Produktkollektionen zuzuführen sind,
**dadurch gekennzeichnet, dass** das Steuermodul (15) eingerichtet ist, Informationen über die bestimmten zuzuführenden Produkte (P1, P2, P3, P4, P5, P6) über einen drahtlosen Kommunikationskanal jeweils an eine mobile Anzeigevorrichtung (33) einer mobilen Transportvorrichtung (3) zum Herbeiführen der zuzuführenden Produkte (P1, P2, P3, P4, P5, P6) zum betreffenden Zuförderer (23), zum Anzeigen der zum betreffenden Zuförderer (23) zuzuführenden Produkte (P1, P2, P3, P4, P5, P6) zu übermitteln.

2. Die Vorrichtung nach Anspruch 1, **dadurch gekennzeichnet, dass** das Steuermodul (15) eingerichtet ist, während der definierten Produktion die von den Zuförderern (23) dem Förderer (21) zugeführten Produkte (P1, P2, P3, P4, P5, P6) zu erfassen und basierend auf den Belegungsplänen (17) einen bei einem der Zuförderer (23) bevorstehenden Wechsel der Art des zuzuführenden Produkts (P1, P2, P3, P4, P5, P6) zu bestimmen und Informationen über das Produkt (P1, P2, P3, P4, P5, P6), mit dem der Zuförderer (23) für den bevorstehenden Wechsel zu belegen ist, über den drahtlosen Kommunikationskanal an die mobile Anzeigevorrichtung (33) zu übermitteln.

3. Die Vorrichtung nach einem der Ansprüche 1 oder 2, **dadurch gekennzeichnet, dass** das Steuermodul (15) eingerichtet ist, während der definierten Produktion basierend auf den Belegungsplänen (17) eine Zeitdauer bis zu einem bei einem der Zuförderer (23) bevorstehenden Wechsel der Art des zuzuführenden Produkts (P1, P2, P3, P4, P5, P6) zu bestimmen und über den drahtlosen Kommunikationskanal an die mobile Anzeigevorrichtung (33) zu übermitteln.

4. Die Vorrichtung nach einem der Ansprüche 1 bis 3, **dadurch gekennzeichnet, dass** das Steuermodul (15) eingerichtet ist, jeweils eine grafische Darstellung und eine Orientierung der zuzuführenden Produkte (P1, P2, P3, P4, P5, P6) auf einer Anzeige (22) des betreffenden Zuförderers (23) darzustellen, und Informationen über die zuzuführenden Produkte (P1, P2, P3, P4, P5, P6) zur grafischen Darstellung der zuzuführenden Produkte (P1, P2, P3, P4, P5, P6) über den drahtlosen Kommunikationskanal an die mobile Anzeigevorrichtung (33) zu übermitteln.

5. Die Vorrichtung nach einem der Ansprüche 1 bis 4, **dadurch gekennzeichnet, dass** der Belegungsplaner (12) eingerichtet ist, die Belegungspläne (17) für die definierte Produktion gemäss definierten Optimierungsregeln (18) zu erzeugen.

6. Die Vorrichtung nach Anspruch 5, **dadurch gekennzeichnet, dass** der Belegungsplaner (12) eingerichtet ist, aus den definierten Optimierungsregeln (18) die zur Erzeugung der Belegungspläne (17) zu verwendenden Optimierungsregeln (18) basierend auf einem von mehreren möglichen Optimierungszielen zu bestimmen.

7. Die Vorrichtung nach einem der Ansprüche 1 bis 6, **dadurch gekennzeichnet, dass** der Belegungsplaner (12) eingerichtet ist, für verschiedene mögliche Produktionsbedingungen (19), welche mindestens eines definieren aus: eine Konfiguration der Druckproduktverarbeitungsanlage (2), die Verfügbarkeit von Bedienpersonal der Druckproduktverarbeitungsanlage (2) und ein Optimierungsziel, Sätze mit verschiedenen Belegungsplänen (17) für die Zuförderer (23) zu erzeugen und zu speichern, und dass das Steuermodul (15) eingerichtet ist, für die definierte Produktion aktuelle Produktionsbedingungen der Druckproduktverarbeitungsanlage (2) zu erfassen und basierend auf den aktuellen Produktionsbedingungen einen der Sätze der Belegungspläne (17) für die definierte Produktion zu wählen.

8. Die Vorrichtung nach einem der Ansprüche 1 bis 7, **dadurch gekennzeichnet, dass** das Steuermodul (15) eingerichtet ist, während der definierten Produktion aktuelle Produktionsbedingungen zu erfassen, welche mindestens eines definieren aus: eine aktuelle Konfiguration der Druckproduktverarbeitungsanlage (2), die aktuelle Verfügbarkeit von Bedienpersonal der Druckproduktverarbeitungsanlage (2) und ein aktuelles Optimierungsziel, und dass der Belegungsplaner (12) eingerichtet ist, die Belegungspläne (17) während der definierten Produktion basierend auf den aktuellen Produktionsbedingungen der Druckproduktverarbeitungsanlage (2) anzupassen.

9. Die Vorrichtung nach einem der Ansprüche 1 bis 8, **dadurch gekennzeichnet, dass** der Belegungsplaner (12) eingerichtet ist, für die definierte Produktion mehrere verschiedene Sätze mit verschiedenen Belegungsplänen (17) für die Zuförderer (23) zu erzeugen, dass die Steuervorrichtung (1) einen Simulator (120) umfasst, der eingerichtet ist, die definierte Produktion für die verschiedenen Sätze von Belegungsplänen (17) zu simulieren und jeweils eine simulierte Produktionsdauer zu bestimmen, und dass der Belegungsplaner (12) eingerichtet ist, für die definierte Produktion den Satz von Belegungsplänen (17) mit der kürzesten simulierten Produktionsdauer zu verwenden.

10. Ein computerimplementiertes Verfahren zur Steuerung einer Druckproduktverarbeitungsanlage (2), welche eine Sammelanlage (20) mit einem Förderer (21) und einer Vielzahl von Zuförderern (23) zur Erstellung von Produktkollektionen aus von den Zuförderern (23) zugeführten Produkten (P1, P2, P3, P4, P5, P6) verschiedener Art umfasst, umfassend:
Erzeugen und Speichern (S4) in einer computerisierten Steuervorrichtung (1) von einem oder mehreren Belegungsplänen (17), die für die Zuförderer (23) jeweils eine zeitliche Reihenfolge der Produkte (P1, P2, P3, P4, P5, P6) angeben, welche für eine definierte Produktion von mehreren verschiedenen, jeweils aus mehreren zugeführten Produkten (P1, P2, P3, P4, P5, P6) zu erstellenden Produktkollektionen, vom Zuförderer (23) dem Förderer (21) zuzuführen sind,
Bestimmen (S54) in der computerisierten Steuervorrichtung (1) der zuzuführenden Produkte (P1, P2, P3, P4, P5, P6), die jeweils von einem der Zuförderer (23) dem Förderer (21) zur Erstellung der Produktkollektionen zuzuführen sind, basierend auf den Belegungsplänen (17),
**gekennzeichnet durch** Übermitteln von Informationen über die bestimmten zuzuführenden Produkte (P1, P2, P3, P4, P5, P6) über einen drahtlosen Kommunikationskanal jeweils an eine mobile Anzeigevorrichtung (33) einer mobilen Transportvorrichtung (3) zum Herbeiführen der zuzuführenden Produkte (P1, P2, P3, P4, P5, P6) zum betreffenden Zuförderer (23), zum Anzeigen der zum betreffenden Zuförderer (23) zuzuführenden Produkte (P1, P2, P3, P4, P5, P6).

11. Das Verfahren nach Anspruch 10, **gekennzeichnet durch** Erfassen, während der definierten Produktion, der von den Zuförderern (23) dem Förderer (21) zugeführten Produkte (P1, P2, P3, P4, P5, P6), Bestimmen (S61) in der computerisierten Steuervorrichtung (1), basierend auf den Belegungsplänen (17), eines bei einem der Zuförderer (23) bevorstehenden Wechsels der Art des zuzuführenden Produkts (P1, P2, P3, P4, P5, P6), und Übermitteln von Informationen über das Produkt (P1, P2, P3, P4, P5, P6), mit dem der Zuförderer (23) für den bevorstehenden Wechsel zu belegen ist, über den drahtlosen Kommunikationskanal an die mobile Anzeigevorrichtung (33).

12. Das Verfahren nach einem der Ansprüche 10 oder 11, **gekennzeichnet durch** Bestimmen in der computerisierten Steuervorrichtung (1), während der definierten Produktion, einer Zeitdauer bis zu einem bei einem der Zuförderer (23) bevorstehenden Wechsel der Art des zuzuführenden Produkts (P1, P2, P3, P4, P5, P6), basierend auf den Belegungsplänen (17), und Übermitteln der Zeitdauer über den drahtlosen Kommunikationskanal an die mobile Anzeigevorrichtung (33).

13. Das Verfahren nach einem der Ansprüche 10 bis 12, **gekennzeichnet durch** Anzeigen einer grafischen Darstellung und einer Orientierung der zuzuführenden Produkte (P1, P2, P3, P4, P5, P6) auf einer Anzeige (22) des betreffenden Zuförderers (23), und Übermitteln von Informationen über die zuzuführenden Produkte (P1, P2, P3, P4, P5, P6) zur grafischen Darstellung der zuzuführenden Produkte (P1, P2, P3, P4, P5, P6) über den drahtlosen Kommunikationskanal an die mobile Anzeigevorrichtung (33).

14. Das Verfahren nach einem der Ansprüche 10 bis 13, **gekennzeichnet durch** Selektion (S43) von einem aus mehreren möglichen Optimierungszielen, Bestimmen in der computerisierten Steuervorrichtung (1) von definierten Optimierungsregeln (18) basierend auf dem einen von mehreren möglichen Optimierungszielen, und Erzeugen (S44) der Belegungspläne (17) in der computerisierten Steuervorrichtung (1) für die definierte Produktion gemäss den bestimmten definierten Optimierungsregeln (18).

15. Das Verfahren nach einem der Ansprüche 10 bis 14, **gekennzeichnet durch** Erzeugen und Speichern (S4) in der computerisierten Steuervorrichtung (1) von Sätzen mit verschiedenen Belegungsplänen (17) für die Zuförderer (23) für verschiedene mögliche Produktionsbedingungen (19), welche mindestens eines definieren aus: eine Konfiguration der Druckproduktverarbeitungsanlage (2), die Verfügbarkeit von Bedienpersonal der Druckproduktverarbeitungsanlage (2) und ein Optimierungsziel, Erfassen (S52) aktueller Produktionsbedingungen der Druckproduktverarbeitungsanlage (2) in der computerisierten Steuervorrichtung (1) für die definierte Produktion, und Wahl (S53) in der computerisierten Steuervorrichtung (1) einer der Sätze der Belegungspläne (17) für die definierte Produktion basierend auf den aktuellen Produktionsbedingungen.

16. Das Verfahren nach einem der Ansprüche 10 bis 15, **gekennzeichnet durch** Erfassen (S58) aktueller Produktionsbedingungen der Druckproduktverarbeitungsanlage (2) in der computerisierten Steuervorrichtung (1) während der definierten Produktion, welche mindestens eines definieren aus: eine aktuelle Konfiguration der Druckproduktverarbeitungsanlage (2), die aktuelle Verfügbarkeit von Bedienpersonal der Druckproduktverarbeitungsanlage (2) und ein aktuelles Optimierungsziel, und Anpassen (S59) der Belegungspläne (17) in der computerisierten Steuervorrichtung (1) während der definierten Produktion basierend auf den aktuellen Produktionsbedingungen der Druckproduktverarbeitungsanlage (2).

17. Das Verfahren nach einem der Ansprüche 10 bis 16, **gekennzeichnet durch** Erzeugen (S44) in der computerisierten Steuervorrichtung (1) für die definierte Produktion von Sätzen mit verschiedenen Belegungsplänen (17) für die Zuförderer (23), Simulieren (S45) der definierten Produktion für die verschiedenen Sätze von Belegungsplänen (17) und jeweils Bestimmen (S46) einer simulierten Produktionsdauer, und Verwenden des Satzes von Belegungsplänen (17) mit der kürzesten simulierten Produktionsdauer für die definierte Produktion.

18. Computerprogrammprodukt, umfassend ein greifbares computerlesbares Speichermedium mit gespeichertem Computercode, welcher eingerichtet ist, einen oder mehrere Prozessoren einer Steuervorrichtung (1) zur Steuerung einer Druckproduktverarbeitungsanlage (2), welche eine Sammelanlage (20) mit einem Förderer (21) und mehreren Zuförderern (23) zur Erstellung von Produktkollektionen aus von den Zuförderern (23) zugeführten Produkten (P1, P2, P3, P4, P5, P6) umfasst, so zu steuern, dass die Prozessoren ein Verfahren gemäss einem der Ansprüche 10 bis 17 ausführen.

## Claims

1. A computerized control device (1) for controlling a printed product processing system (2) that comprises a collecting system (20) having a conveyor (21) and a plurality of feed conveyors (23) for creating product collections from different types of products (P1, P2, P3, P4, P5, P6) supplied by the feed conveyors (23), **characterized by**
a loading planner (12) for generating and saving one or more loading plans (17), which for each of the feed conveyors (23) indicate a time sequence of the products (P1, P2, P3, P4, P5, P6) that are to be supplied to the conveyor (21) by the feed conveyor (23) for a defined production process of a plurality of different product collections, each to be created from a plurality of supplied products (P1, P2, P3, P4, P5, P6), and
a control module (15) that is configured for determining, based on the loading plans (17), the products (P1, P2, P3, P4, P5, P6) to be supplied, which are each to be supplied to the conveyor (21) by one of the feed conveyors (23) for creating the product collections,
**characterized in that** the control module (15) is configured for transmitting in each case information concerning the determined products (P1, P2, P3, P4, P5, P6) to be supplied in question, via a wireless communications channel, to a mobile display device (33) of a mobile transport device (3) for bringing the products (P1, P2, P3, P4, P5, P6) to be supplied to the feed conveyor (23) in question, in order to display the products (P1, P2, P3, P4, P5, P6) to be supplied to the corresponding feed conveyor (23).

2. The device according to Claim 1, **characterized in that** the control module (15) is configured for recording during the defined production process the products (P1, P2, P3, P4, P5, P6) supplied by the feed conveyors (23) to the conveyor (21), and for determining, based on the loading plans (17), an imminent change in the type of product (P1, P2, P3, P4, P5, P6) to be supplied for one of the feed conveyors (23), and for transmitting to the mobile display device, via the wireless communications channel, information concerning the product (P1, P2, P3, P4, P5, P6) to be loaded on the feed conveyor (23) for the imminent change.

3. The device according to one of Claims 1 or 2, **characterized in that** the control module (15) is configured for determining during the defined production process, based on the loading plans (17), a time period until an imminent change in the type of product (P1, P2, P3, P4, P5, P6) to be supplied to one of the feed conveyors (23), and for transmitting this time period to the mobile display device (33) via the wireless communications channel.

4. The device according to one of Claims 1 to 3, **characterized in that** the control module (15) is configured for displaying in each case on a display (22) of the feed conveyor (23) in question a graphical depiction and an orientation of the products (P1, P2, P3, P4, P5, P6) to be supplied, and for transmitting to the mobile display device (33), via the wireless communications channel, information concerning the products (P1, P2, P3, P4, P5, P6) to be supplied for the graphical depiction of the products (P1, P2, P3, P4, P5, P6) to be supplied.

5. The device according to one of Claims 1 to 4, **characterized in that** the loading planner (12) is configured for generating the loading plans (17) for the defined production process according to defined optimization rules (18).

6. The device according to Claim 5, **characterized in that** the loading planner (12) is configured for determining from the defined optimization rules (18), based on one of a plurality of possible optimization objectives, the optimization rules (18) to be used to generate the loading plans (17).

7. The device according to one of Claims 1 to 6, **characterized in that** the loading planner (12) is configured for generating and saving records containing different loading plans (17) for the feed conveyors (23) for different possible production conditions (19) that define at least one of: a configuration of the printed product processing system (2), the availability of operating personnel of the printed product processing system (2), and an optimization objective, and that the control module (15) is configured for recording current production conditions of the printed product processing system (2) for the defined production process, and for selecting, based on the current production conditions, one of the records of the loading plans (17) for the defined production process.

8. The device according to one of Claims 1 to 7, **characterized in that** the control module (15) is configured for recording during the defined production process current production conditions that define at least one of: a current configuration of the printed product processing system (2), the current availability of operating staff of the printed product processing system (2), and a current optimization objective, and that the loading planner (12) is configured for adapting the loading plans (17) during the defined production process, based on the current production conditions of the printed product processing system (2).

9. The device according to one of Claims 1 to 8, **characterized in that** the loading planner (12) is configured for generating for the defined production process a plurality of different records containing different loading plans (17) for the feed conveyors (23), that the control device (1) includes a simulator (120) that is configured for simulating the defined production process for the different records of loading plans (17) and for determining in each case a simulated production duration, and that the loading planner (12) is configured for using, for the defined production process, the record of loading plans (17) having the shortest simulated production duration.

10. A computer-implemented method for controlling a printed product processing system (2) that comprises a collecting system (20) having a conveyor (21) and a multiplicity of feed conveyors (23) for creating product collections from different types of products (P1, P2, P3, P4, P5, P6) supplied by the feed conveyors (23), the computer-implemented method comprising:
generating and saving (S4) in a computerized control device (1) one or more loading plans (17) that indicate for each of the feed conveyors (23) a time sequence of the products (P1, P2, P3, P4, P5, P6) that are to be supplied to the conveyor (21) by the feed conveyor (23) for a defined production process of a plurality of different product collections, each to be created from a plurality of supplied products (P1, P2, P3, P4, P5, P6),
determining (S54) in the computerized control device, based on the loading plans (17), the products (P1, P2, P3, P4, P5, P6) to be supplied, which are each to be supplied by one of the feed conveyors (23) to the conveyor (21) for creating the product collections, **characterized by**
transmitting in each case information concerning the determined products (P1, P2, P3, P4, P5, P6) to be supplied, via a wireless communications channel, to a mobile display device (33) of a mobile transport device (3) for bringing the products (P1, P2, P3, P4, P5, P6) to be supplied to the feed conveyor (23) in question, in order to display the products (P1, P2, P3, P4, P5, P6) to be supplied to the corresponding feed conveyor (23) in question.

11. The method according to Claim 10, **characterized by** recording during the defined production process the products (P1, P2, P3, P4, P5, P6) supplied by the feed conveyors (23) to the conveyor, determining (S61) in the computerized control device (1), based on the loading plans (17), an imminent change in the type of product (P1, P2, P3, P4, P5, P6) to be supplied for one of the feed conveyors (23), and transmitting to the mobile display device (33), via the wireless communications channel, information concerning the product (P1, P2, P3, P4, P5, P6) to be loaded on the feed conveyor (23) for the imminent change.

12. The method according to one of Claims 10 or 11, **characterized by** determining in the computerized control device (1) during the defined production process, based on the loading plans (17), a time period until an imminent change in the type of product (P1, P2, P3, P4, P5, P6) to be supplied for one of the feed conveyors (23), and transmitting the time period to the mobile display device (33) via the wireless communications channel.

13. The method according to one of Claims 10 to 12, **characterized by** displaying on a display (22) of the feed conveyor (23) in question a graphical depiction and an orientation of the products (P1, P2, P3, P4, P5, P6) to be supplied, and by transmitting to the mobile display device (33), via the wireless communications channel, information concerning the products (P1, P2, P3, P4, P5, P6) to be supplied for the graphical depiction of the products (P1, P2, P3, P4, P5, P6) to be supplied.

14. The method according to one of Claims 10 to 13, **characterized by** selecting (S43) one of a plurality of possible optimization objectives, determining in the computerized control device (1) defined optimization rules (18) based on the one of a plurality of possible optimization objectives, and generating (S44) the loading plans (17) in the computerized control device (1) for the defined production according to the determined defined optimization rules (18).

15. The method according to one of Claims 10 to 14, **characterized by** generating and saving (S4) in the computerized control device (1) records containing different loading plans (17) for the feed conveyors (23) for different possible production conditions (19) that define at least one of: a configuration of the printed product processing system (2), the availability of operating personnel of the printed product processing system (2), and an optimization objective, recording (S52) current production conditions of the printed product processing system (2) in the computerized control device (1) for the defined production process, and selecting (S53) in the computerized control device (1), based on the current production conditions, one of the records of the loading plans (17) for the defined production process.

16. The method according to Claims 10 to 15, **characterized by** recording (S58) in the computerized control device (1) during the defined production process current production conditions of the printed product processing system (2) that define at least one of: a current configuration of the printed product processing system (2), the current availability of operating staff of the printed product processing system (2), and a current optimization objective, and adapting (S59) the loading plans (17) in the computerized control device (1) during the defined production process, based on the current production conditions of the printed product processing system (2).

17. The method according to Claims 10 to 16, **characterized by** generating (S44) in the computerized control device (1), for the defined production process, records containing different loading plans (17) for the feed conveyors (23), simulating (S45) the defined production process for the different records of loading plans (17), and determining (S46) in each case a simulated production duration, and using the record of loading plans (17) having the shortest simulated production duration for the defined production process.

18. A computer program product comprising a tangible computer-readable storage medium containing stored computer code, the code being configured for controlling one or more processors of a control device (1) for controlling a printed product processing system (2) that comprises a collecting system (20) having a conveyor (21) and a multiplicity of feed conveyors (23) for creating product collections from products (P1, P2, P3, P4, P5, P6) supplied by the feed conveyors (23), in such a way that the processors execute a method according to one of Claims 1 to 17.

## Revendications

1. Dispositif de commande informatisé (1), destiné à commander une installation de traitement de produits d'impression (2), comprenant une installation de collecte (20) équipée d'un convoyeur (21) et d'une pluralité de convoyeurs d'acheminement (23) pour créer des collections de produits à partir de produits (P1, P2, P3, P4, P5, P6) de types différents qui sont acheminés par les convoyeurs d'acheminement (23), **caractérisé par**
un planificateur d'ordonnancement (12) destiné à générer et mémoriser un ou plusieurs plans d'ordonnancement (17) qui indiquent pour chacun des convoyeurs d'acheminement (23) un ordre temporel des produits (P1, P2, P3, P4, P5, P6) qui doivent être acheminés du convoyeur d'acheminement (23) au convoyeur (21) pour une production définie d'une pluralité de collections de produits différentes à créer à partir d'une pluralité de produits acheminés (P1, P2, P3, P4, P5, P6), et
un module de commande (15) qui est adapté pour déterminer, sur la base des plans d'ordonnancement (17), les produits à acheminer (P1, P2, P3, P4, P5, P6) qui doivent chacun être acheminés de l'un des convoyeurs d'acheminement (23) au convoyeur (21) pour créer les collections de produits,
**caractérisé en ce que** le module de commande (15) est adapté pour transmettre des informations sur les produits à acheminer déterminés (P1, P2, P3, P4, P5, P6) par le biais d'un canal de communication sans fil à chaque fois à un dispositif d'affichage mobile (33) d'un dispositif de transport mobile (3) pour amener les produits à acheminer (P1, P2, P3, P4, P5, P6) au convoyeur d'acheminement concerné (23), pour afficher les produits à acheminer (P1, P2, P3, P4, P5, P6) au convoyeur d'acheminement concerné (23).

2. Dispositif selon la revendication 1, **caractérisé en ce que** le module de commande (15) est adapté pour détecter, lors de la production définie, les produits (P1, P2, P3, P4, P5, P6) acheminés par les convoyeurs d'acheminement (23) au convoyeur (21), déterminer un changement imminent, au niveau de l'un des convoyeurs d'acheminement (23), du type du produit à acheminer (P1, P2, P3, P4, P5, P6) sur la base des plans d'ordonnancement (17) et transmettre au dispositif d'affichage mobile (33), par le biais du canal de communication sans fil, des informations sur le produit (P1, P2, P3, P4, P5, P6), avec lequel le convoyeur d'acheminement (23) doit être ordonnancé pour le changement imminent.

3. Dispositif selon la revendication 1 ou 2, **caractérisé en ce que** le module de commande (15) est adapté pour déterminer, lors de la production définie, une durée jusqu'à un changement imminent, au niveau de l'un des convoyeurs d'acheminement (23), du type du produit à acheminer (P1, P2, P3, P4, P5, P6) sur la base des plans d'ordonnancement (17), et transmettre celle-ci au dispositif d'affichage mobile (33) par le biais du canal de communication sans fil.

4. Dispositif selon l'une des revendications 1 à 3, **caractérisé en ce que** le module de commande (15) est adapté pour présenter à chaque fois une représentation graphique et une orientation des produits à acheminer (P1, P2, P3, P4, P5, P6) sur un affichage (22) du convoyeur d'acheminement concerné (23) et transmette au dispositif d'affichage mobile (33), par le biais du canal de communication sans fil, des informations sur les produits à acheminer (P1, P2, P3, P4, P5, P6) pour la représentation graphique des produits à acheminer (P1, P2, P3, P4, P5, P6).

5. Dispositif selon l'une des revendications 1 à 4, **caractérisé en ce que** le planificateur d'ordonnancement (12) est adapté pour générer les plans d'ordonnancement (17) pour la production définie selon des règles d'optimisation définies (18).

6. Dispositif selon la revendication 5, **caractérisé en ce que** le planificateur d'ordonnancement (12) est adapté pour déterminer, à partir des règles d'optimisation définies (18), les règles d'optimisation (18) à utiliser pour générer les plans d'ordonnancement (17) sur la base de l'un des nombreux objectifs d'optimisation possibles.

7. Dispositif selon l'une des revendications 1 à 6, **caractérisé en ce que** le planificateur d'ordonnancement (12) est adapté pour générer et mémoriser, pour diverses conditions de production possibles (19) qui définissent au moins un parmi : une configuration de l'installation de traitement de produits d'impression (2), la disponibilité des opérateurs de l'installation de traitement de produits d'impression (2) et un objectif d'optimisation, des ensembles de plans d'ordonnancement différents (17) destinés aux convoyeurs d'acheminement (23) et **en ce que** le module de commande (15) est adapté pour détecter, pour la production définie, des conditions de production actuelles de l'installation de traitement de produits d'impression (2) et sélectionner l'un des ensembles de plans d'ordonnancement (17) pour la production définie sur la base des conditions de production actuelles.

8. Dispositif selon l'une des revendications 1 à 7, **caractérisé en ce que** le module de commande (15) est adapté pour détecter, lors de la production définie, des conditions actuelles de production qui définissent au moins l'un parmi: une configuration actuelle de l'installation de traitement de produits d'impression (2), la disponibilité actuelle des opérateurs de l'installation de traitement de produits d'impression (2) et un objectif d'optimisation actuel et **en ce que** le planificateur d'ordonnancement (12) est adapté pour ajuster les plans d'ordonnancement (17) lors de la production définie sur la base de la conditions actuelles de production de l'installation de traitement de produits d'impression (2).

9. Dispositif selon l'une des revendications 1 à 8, **caractérisé en ce que** le planificateur d'ordonnancement (12) est adapté pour générer, pour la production définie, une pluralité d'ensembles différent de plans d'ordonnancement différents (17) pour le convoyeur d'acheminement (23), **en ce que** le dispositif de commande (1) comprend un simulateur (120) qui est adapté pour simuler la production définie pour les différents ensembles de plans d'ordonnancement (17) et déterminer à chaque fois une durée de production simulée, et **en ce que** le planificateur d'ordonnancement (12) est adapté pour utiliser, pour la production définie (17), l'ensemble des plans d'ordonnancement (17) ayant la durée de production simulée la plus courte.

10. Procédé informatisé de commande d'une installation de traitement de produits d'impression (2) comprenant une installation de collecte (20) équipée d'un convoyeur (21) et d'une pluralité de convoyeurs d'acheminement (23) pour créer des collections de produits à partir de produits (P1, P2, P3, P4, P5, P6) de types différents, le procédé comprenant :
la génération et la mémorisation (S4) d'un ou de plusieurs plans d'ordonnancement (17) qui indiquent pour chacun des convoyeurs d'acheminement (23) un ordre temporel des produits (P1, P2, P3, P4, P5, P6) qui doivent être acheminés du convoyeur d'acheminement (23) au convoyeur (21) pour une production définie d'une pluralité de collections de produits différentes à créer à partir d'une pluralité de produits acheminés (P1, P2, P3, P4, P5, P6),
la détermination (S54) dans le dispositif de commande informatisé, sur la base des plans d'ordonnancement (17), des produits à acheminer (P1, P2, P3, P4, P5, P6) qui doivent chacun être acheminés de l'un des convoyeurs d'acheminement (23) au convoyeur (21) pour créer les collections de produits,
**caractérisé par** la transmission des informations sur les produits à acheminer déterminés (P1, P2, P3, P4, P5, P6) par le biais d'un canal de communication sans fil à chaque fois à un dispositif d'affichage mobile (33) d'un dispositif de transport mobile (3) pour amener les produits à acheminer (P1, P2, P3, P4, P5, P6) au convoyeur d'acheminement concerné (23), pour afficher les produits (P1, P2, P3, P4, P5, P6) à acheminer au convoyeur d'acheminement.

11. Procédé selon la revendication 10, **caractérisé par** la détection, lors de la production définie, des produits (P1, P2, P3, P4, P5, P6) acheminés par les convoyeurs d'acheminement (23) au convoyeur (21), la détermination (S61) d'un changement imminent, au niveau de l'un des convoyeurs d'acheminement (23), du type du produit à acheminer (P1, P2, P3, P4, P5, P6) sur la base des plans d'ordonnancement (17) et la transmission au dispositif d'affichage mobile (33), par le biais du canal de communication sans fil, des informations sur le produit (P1, P2, P3, P4, P5, P6), avec lequel le convoyeur d'acheminement (23) doit être ordonnancé pour le changement imminent.

12. Procédé selon l'une des revendication 10 ou 11, **caractérisé par** la détermination dans le dispositif de commande informatisé (1), lors de la production définie, d'une durée jusqu'à un changement imminent, au niveau de l'un des convoyeurs d'acheminement (23), du type du produit à acheminer (P1, P2, P3, P4, P5, P6) sur la base des plans d'ordonnancement (17), et la transmission de celle-ci au dispositif d'affichage mobile (33) par le biais du canal de communication sans fil.

13. Procédé selon l'une des revendications 10 à 12, **caractérisé par** la présentation d'une représentation graphique et d'une orientation des produits à acheminer (P1, P2, P3, P4, P5, P6) sur un affichage (22) du convoyeur d'acheminement concerné (23) et la transmission au dispositif d'affichage mobile (33), par le biais du canal de communication sans fil, des informations sur les produits à acheminer (P1, P2, P3, P4, P5, P6) pour la représentation graphique des produits à acheminer (P1, P2, P3, P4, P5, P6).

14. Procédé selon l'une des revendications 10 à 13, **caractérisé par** la sélection (S43) de l'un parmi la pluralité d'objectifs d'optimisation possibles, la détermination dans le dispositif de commande informatisé (1) de règles d'optimisation définies (18) sur la base de l'un parmi la pluralité d'objectifs d'optimisation possibles, et la génération (S44) des plans d'ordonnancement (17) dans le dispositif de commande informatisé (1) pour la production défini selon les règles d'optimisation définies déterminées (18).

15. Procédé selon l'une des revendications 10 à 14, **caractérisé par** la génération et la mémorisation (S4) dans le dispositif de commande informatisé, d'ensembles de plans d'ordonnancement différents (17) destinés aux convoyeurs d'acheminement (23) pour diverses conditions de production possibles (19) qui définissent au moins un parmi : une configuration de l'installation de traitement de produits d'impression (2), la disponibilité des opérateurs de l'installation de traitement de produits d'impression (2) et un objectif d'optimisation, la détection (S52) de conditions de production actuelles de l'installation de traitement de produits d'impression (2) dans le dispositif de commande informatisé (1) pour la production définie, et la sélection (S53) dans le dispositif de commande informatisé (1) de l'un des ensembles de plans d'ordonnancement (17) pour la production définie sur la base des conditions de production actuelles.

16. Procédé selon l'une des revendications 10 à 15, **caractérisé par** la détection (S58) de conditions actuelles de production de l'installation de traitement de produits d'impression (2) dans le dispositif de commande informatisé (1) lors de la production définie, lesquelles définissent au moins l'un parmi: une configuration actuelle de l'installation de traitement de produits d'impression (2), la disponibilité actuelle des opérateurs de l'installation de traitement de produits d'impression (2) et un objectif d'optimisation actuel et l'ajustement (S59) des plans d'ordonnancement (17) dans le dispositif de commande informatisé (1) lors de la production définie sur la base de la conditions actuelles de production de l'installation de traitement de produits d'impression (2).

17. Procédé selon l'une quelconque des revendications 10 à 16, **caractérisé par** la génération (S44) dans le dispositif de commande informatisé (1), pour la production définie, d'ensembles de plans d'ordonnancement différents (17) pour le convoyeur d'acheminement (23), la simulation (S45) de la production définie pour les différents ensembles de plans d'ordonnancement (17) et la détermination (S46) à chaque fois d'une durée de production simulée, et l'utilisation de l'ensemble de plans d'ordonnancement (17) ayant la durée de production simulée la plus courte pour la production définie.

18. Produit de programme d'ordinateur comprenant un support de stockage tangible lisible par un ordinateur et pourvu d'un code d'ordinateur mémorisé qui est adapté pour commander un ou plusieurs processeurs d'un dispositif de commande (1) destiné à commander une installation de traitement de produits d'impression (2) qui comporte une installation de collecte (20) équipée d'un convoyeur (21) et d'une pluralité de convoyeurs d'acheminement (23) pour créer des collections de produits (P1, P2, P3, P4, P5, P6) acheminés par les convoyeurs d'acheminement (23) de sorte que les processeurs mettent en oeuvre un procédé selon l'une quelconque des revendications 10 à 17.
